(19) Europäisches Patentamt
European Patent Office
Office européen des brevets

(11) **EP 4 678 474 A1**

(12) **EUROPEAN PATENT APPLICATION**
published in accordance with Art. 153(4) EPC

(43) Date of publication:
**14.01.2026 Bulletin 2026/03**

(21) Application number: **24770675.7**

(22) Date of filing: **06.03.2024**

(51) International Patent Classification (IPC):
*B60Q 1/14 (2006.01)* *B60Q 1/02 (2006.01)*
*B60Q 1/04 (2006.01)* *B60Q 1/10 (2006.01)*
*F21S 41/153 (2018.01)* *F21S 41/663 (2018.01)*
*F21W 102/145 (2018.01)* *F21Y 105/10 (2016.01)*
*F21Y 115/10 (2016.01)*

(52) Cooperative Patent Classification (CPC):
**B60Q 1/02; B60Q 1/04; B60Q 1/10; B60Q 1/14;**
**F21S 41/153; F21S 41/663;** F21W 2102/145;
F21Y 2105/10; F21Y 2115/10

(86) International application number:
**PCT/JP2024/008565**

(87) International publication number:
**WO 2024/190568 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023 JP 2023037427**
**24.03.2023 JP 2023048537**
**25.04.2023 JP 2023071741**
**18.05.2023 JP 2023082356**

(71) Applicant: **Koito Manufacturing Co., Ltd.**
**Shinagawa-ku, Tokyo 141-0001 (JP)**

(72) Inventors:
• **NODA, Keisuke**
  **Shizuoka-shi Shizuoka 424-8764 (JP)**
• **SAWADA, Hirotaka**
  **Shizuoka-shi Shizuoka 424-8764 (JP)**

(74) Representative: **Algemeen Octrooi- en
Merkenbureau B.V.
P.O. Box 645
5600 AP Eindhoven (NL)**

(54) **CONTROL DEVICE FOR LIGHT-DISTRIBUTION-ADJUSTABLE LAMP, VEHICLE LAMP, AND SOFTWARE PROGRAM**

(57)     The controller 300 generates a control image IMG1 for controlling a variable light distribution lamp 210. The controller 300 acquires shading information ROI that indicates a shading zone which is a region to be shaded. Among a plurality of first pixels PIX1 contained in the control image IMG1, a pixel value of a part that corresponds to the shading zone is zero. When the controller 300 gradually changes the pixel value of the first pixels PIX1 contained in the control image IMG1 from zero towards a target value, the rate of increase $\alpha$ of the pixel value in the first period $T_1$ that follows the start of the gradual change control is relatively lower than the rate of increase $\beta$ of the pixel value in the second period $T_2$ subsequent to the first period $T_1$.

FIG. 3

## Description

### TECHNICAL FIELD

The present disclosure relates to a vehicle lamp apparatus.

### BACKGROUND ART

Vehicle lamp apparatuses are generally designed to be switchable between low beam illumination and high beam illumination. The low beam illumination aims to illuminate a nearby area of a host vehicle with a predetermined illuminance, whose light distribution is regulated by law so as not to cast glare to oncoming car or preceding car, and is mainly used during travel in an urban area. On the other hand, the high beam illumination aims to illuminate a wide and far front area with a relatively high illuminance, and is mainly used during high-speed travel on roads with less traffic of oncoming car or preceding car. The high beam illumination, which is superior to the low beam illumination in terms of visibility by the driver, has however suffered from a problem of casting glare to vehicle driver or pedestrian ahead of the vehicle.

There is a recent proposal on adaptive driving beam (ADB) technology for dynamically and adaptively controlling a high beam light distribution pattern, with reference to surrounding situation of the vehicle. The ADB technology is designed to detect the preceding vehicle and the oncoming vehicle (collectively referred to as front vehicles), or the pedestrian ahead of the host vehicle, and to dim an area that corresponds to the vehicles or the pedestrian (referred to as shading zone), thereby reducing the glare possibly cast on the vehicles or the pedestrian.

### RELATED-ART LITERATURE

### PATENT LITERATURE

Patent Literature 1: WO 2021-182151 A1
Patent Literature 2: WO 2021-200701 A1

### SUMMARY OF INVENTION

### TECHNICAL PROBLEM

The ADB control has been advanced towards higher resolution, with use of an LED array, or a spatial light modulator such as DMD or liquid crystal device. High-resolution ADB control can detect the front vehicle with use of a sensor such as camera or LiDAR, and control the shading zone with high definition.

More specifically, the control generates information regarding a range in which the foregoing vehicle resides (referred to as vehicle region of interest (ROI) information), with reference to a sensor output. For example, the vehicle ROI information contains angle information that represents the left end of the vehicle body of the front vehicle, and angle information that represents the right end of the same for the horizontal direction, meanwhile contains angle information that represents the top end of the vehicle body, and angle information that represents the bottom end of the same for the vertical direction. An ADB headlamp generates the shading zone with reference to the vehicle ROI information.

Problem 1: During travel, the vehicle ROI jiggles up and down and left and right. The shading zone, generated with reference to the jiggling vehicle ROI, will consequently jiggle, thus bothering the driver of the host vehicle or drivers of other vehicles.

One embodiment of the present disclosure has been arrived at in consideration of such circumstances, where one exemplary purpose thereof is to provide a vehicle lamp apparatus capable of reducing bother felt by human due to the ADB control.

Problem 2: In a certain specific travel environment, the sensor will be more likely to erroneously detect the front car. For example in an urban area, street lamps, store lighting, and light of other running vehicles may cause the erroneous detection. Also scattering of light due to rain or snow during bad weather may cause the erroneous detection.

Light distribution control in high beam illumination, according to such erroneously detected vehicle ROI, would bother the driver of the host vehicle, or the drivers of other vehicles.

One embodiment of the present disclosure has been arrived at in consideration of such circumstances, where one exemplary purpose thereof is to provide a vehicle lamp apparatus capable of reducing bother felt by human due to the ADB control.

Problem 3: The vehicle ROI information contains some error. In an exemplary case where the front vehicle moves at high speed, the vehicle ROI follows while delayed behind the actual shift of the front vehicle. Or, wrong vehicle ROI information would be generated upon pitching of the host vehicle.

Light distribution control in high beam illumination, according to such wrong vehicle ROI, would cause erroneous illumination in an area which should not actually be illuminated, thus casting glare to other vehicle, or cause erroneous creation of a shading zone in a region which should actually be illuminated.

One embodiment of the present disclosure has been arrived at in consideration of such circumstances, where one exemplary purpose thereof is to provide a vehicle lamp apparatus capable of solving the problem arising from the ADB control.

Problem 4: The ADB control has been advanced towards higher resolution, with use of an LED array, or a spatial light modulator such as DMD or liquid crystal device. High-resolution ADB control can detect the vehicle ROI with use of a sensor such as camera or LiDAR (referred to as ROI sensor, hereinafter), and can control the shading zone with high definition. Performances of the currently available ROI sensors are, however, not sufficient to capture the shift of the vehicle ROI ascribed to pitching vibration of the vehicle body. The light distribution pattern of high beam illumination will, therefore, stay unchanged even under pitching vibration of the vehicle body, thus casting glare to the front vehicle.

This problem may possibly be solved with use of an inclination sensor such as gyro sensor, with which pitching vibration, that is an angle of inclination around the a pitch axis is detected during travel, and a light distribution pattern is dynamically and adaptively corrected according to the angle of inclination of the vehicle body. This type of correction will be also referred to as dynamic electronic optical axis correction, hereinafter.

The present inventors have examined to combine the dynamic electronic optical axis correction with the ADB control with use of the ROI sensor, and have recognized the problems below.

In the ADB control, upon shifting of the vehicle ROI, a zone having been the shading zone will change to an illumination zone. If the zone having been the shading zone were turned back to have a previous level of illuminance immediately upon the shifting, this would cast glare to the front vehicle, in a case where the shifting of the vehicle ROI resulted from erroneous detection. This problem may be solved by employing gradual change control by which the illuminance is slowly elevated, when returning it back to the previous level.

Combination of the gradual change control and the dynamic electronic optical axis correction, however, causes a problem that a dark zone is formed below the shading zone during pitching vibration of the vehicle body. This problem should not be regarded as a general recognition of those skilled in the art.

One embodiment of the present disclosure has been arrived at in consideration of such circumstances, where one exemplary purpose thereof is to provide a vehicle lamp apparatus capable of solving the problem that arose from combination of the ADB control and the dynamic electronic optical axis correction.

SOLUTION TO PROBLEM

1. One embodiment of the present disclosure relates to a controller structured to control a variable light distribution lamp. The variable light distribution lamp contains a plurality of second pixels whose luminance is controllable corresponding to a plurality of first pixels contained in a control image, and is structured to irradiate, with a beam having an intensity distribution corresponding to a luminance distribution of the second pixels, a region where a high beam light distribution is to be formed.

The controller is structured to acquire shading information that indicates a shading zone which is a region to be shaded, and to generate the control image in which pixel values of portions corresponding the shading zone among the plurality of first pixels are zero. When pixel values of the first pixels included in the control image gradually change from zero toward a target value, a rate of increase of the pixel values in a first section after a start of gradual change control is relatively lower than a rate of increase of the pixel values in a second period subsequent to the first period.

2. One embodiment of the present disclosure relates to a controller structured to control a variable light distribution lamp. The variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed. The controller is structured to acquire shading information indicating a shading zone that is a region to be shaded, to generate the control image in which pixel values of portions corresponding to the shading zone among the plurality of first pixels are zero. A waveform of the pixel values when changing the pixel values of the first pixels included in the control image is selectable.

3. One embodiment of the present disclosure relates to a controller structured to control a variable light distribution lamp. The variable light distribution lamp includes a plurality of light-emitting pixels and is structured to irradiate, with a beam having an intensity distribution corresponding to a luminance distribution of the plurality of the light-emitting pixels, a region where a high beam light distribution is to be formed. The controller is structured to acquire information indicating a region of interest (ROI), to turn off a plurality of the light-emitting pixels corresponding to the ROI. The controller is structured, when increasing luminance of the light-emitting pixels from zero toward a target value due to movement of the ROI, to change pixel values of the light-emitting pixels according to different control waveforms depending on a relative positional relationship with the ROI.

4. One embodiment of the present disclosure relates to a controller structured to control a variable light distribution lamp. The variable light-distribution lamp includes a plurality of light-emitting pixels and is structured to irradiate a region in which a high-beam light distribution is to be formed with portions of light having an intensity distribution corresponding to a luminance distribution of the plurality of light-emitting pixels. The controller is structured to: acquire information indicating a region of interest (ROI), and select, as a plurality of off pixels, ones of the plurality of light-emitting pixels corresponding to the ROI such that a shading portion is formed corresponding to the ROI. The controller is structured to detect a tilt angle of a vehicle body, and dynamically shift positions of the plurality of off pixels in an up-down direction such that a position of the shading portion changes according to the tilt angle. Now, the light-emitting pixels that change from off to on as a result of dynamically shifting the positions of the plurality of off pixels are defined to be turn-on pixels. A transition time of a luminance of the turn-on pixels located on a lower-end side of the ROI is shorter than a transition time of a luminance of the turn-on pixels located on an upper-end side of the ROI.

Note that also free combinations of these constituents, and also any of the constituents and expressions exchanged among the method, apparatus, and system, are valid as the modes of the present disclosure. Also note that the description of this section (SOLUTION TO PROBLEM) does not describe all essential features of the invention, and thus also subcombinations of these features described may constitute the invention.

ADVANTAGEOUS EFFECTS OF INVENTION

One embodiment of the present disclosure can reduce the bother felt by human due to the ADB control.

BRIEF DESCRIPTION OF DRAWINGS

[Fig. 1] Fig. 1 is a block diagram of a lamp system according to Embodiment 1.
[Fig. 2] Fig. 2 is a diagram illustrating shift of a vehicle ROI and a control image IMG1.
[Fig. 3] Fig. 3 is a diagram illustrating characteristics of gradual change control according to Embodiment 1.
[Fig. 4] Fig. 4 is a diagram illustrating a characteristic of gradual change control according to a comparative technique.
[Fig. 5] Fig. 5 is a diagram illustrating normalized pixel values of a third part, under employment of the gradual change control according to the comparative technique.
[Fig. 6] Fig. 6 is a diagram illustrating normalized pixel values of the third part, under employment of the gradual change control according to Embodiment 1.
[Fig. 7] Fig. 7 is a diagram explaining creation of a control image by the controller.
[Fig. 8] Fig. 8 is a functional block diagram of the controller.
[Fig. 9] Fig. 9 is a diagram illustrating characteristic of the gradual change control according to a modified example.

[Fig. 10] Fig. 10 is a block diagram illustrating a lamp system according to Embodiment 2.
[Fig. 11] Fig. 11 is a diagram explaining a first waveform and a second waveform.
[Fig. 12] Fig. 12 is a diagram explaining a third waveform and a fourth waveform.
[Fig. 13] Fig. 13 is a diagram explaining switchover of the gradual change control depending on travel scenes.
[Fig. 14] Fig. 14 is a diagram explaining changes in a pixel value of a certain first pixel, under erroneous detection of ROI.
[Fig. 15] Fig. 15 is a diagram illustrating a second waveform in one Example.
[Fig. 16] Fig. 16 is a diagram illustrating the gradual change control according to the second waveform in Fig. 15.
[Fig. 17] Fig. 17 is a diagram illustrating a fourth waveform according to one Example.
[Fig. 18] Fig. 18 is a diagram illustrating shift of the vehicle ROI and the control image.
[Fig. 19] Fig. 19 is a diagram illustrating characteristics (third waveform) of the gradual change control according to Embodiment 2.
[Fig. 20] Fig. 20 is a diagram illustrating a characteristic of the gradual change control according to a comparative technique.
[Fig. 21] Fig. 21 is a diagram illustrating normalized pixel values of a third part, under employment of the gradual change control according to the comparative technique.
[Fig. 22] Fig. 22 is a diagram illustrating normalized pixel values of the third part, under employment of the gradual change control according to Embodiment 2.
[Fig. 23] Fig. 23 is a diagram explaining creation of a control image by the controller.
[Fig. 24] Fig. 24 is a functional block diagram of the controller.
[Fig. 25] Fig. 25 is a diagram illustrating characteristics of the gradual change control according to a modified example.
[Fig. 26] Fig. 26 is a block diagram illustrating a lamp system according to Embodiment 3.
[Fig. 27] Fig. 27 is a diagram illustrating basic control of high beam light distribution accompanying shift of the vehicle ROI.
[Fig. 28] Fig. 28 is a diagram explaining a problem associated with the gradual change control.
[Fig. 29] Figs. 29(a) and (b) are diagrams explaining positional relationships between the vehicle ROI and gradually changing pixels.
[Fig. 30] Fig. 30 is a diagram illustrating exemplary control waveforms.
[Fig. 31] Fig. 31 is a diagram illustrating travel scenes with occurrence of downward pitching.
[Fig. 32] Fig. 32 is a diagram illustrating pixel values at positions X and Y in the travel scenes in Fig. 31.

[Fig. 33] Fig. 33 is a diagram illustrating travel scenes with occurrence of upward pitching.

[Fig. 34] Fig. 34 is a diagram illustrating pixel values at positions X and Z in the travel scenes in Fig. 33.

[Fig. 35] Fig. 35 is a diagram explaining creation of a control image by the controller.

[Fig. 36] Fig. 36 is a functional block diagram of the controller.

[Fig. 37] Fig. 37 is a block diagram illustrating a lamp system according to Embodiment 4.

[Fig. 38] Fig. 38 is a diagram explaining generation of glare, under pitching vibration of a vehicle body in the prior art.

[Fig. 39] Fig. 39 is a diagram explaining control of high beam light distribution by electronic optical axis correction.

[Fig. 40] Fig. 40 is a diagram explaining suppression of glare by dynamic electronic optical axis correction.

[Fig. 41] Fig. 41 is a diagram illustrating a control waveform that defines luminance of upper turn-ON pixel, and a control waveform that defines luminance of lower turn-ON pixel.

[Fig. 42] Fig. 42 is a diagram explaining changes in high beam light distribution according to a comparative technique.

[Fig. 43] Fig. 43 is a diagram explaining a high beam light distribution generated by a lamp system according to Embodiment 4, under upward pitching.

[Fig. 44] Fig. 44 is a diagram explaining a high beam light distribution generated by a lamp system according to Embodiment 4, under downward pitching.

[Fig. 45] Fig. 45 is a diagram explaining creation of a control image by the controller.

[Fig. 46] Fig. 46 is a functional block diagram of the controller.

[Fig. 47] Fig. 47 is a functional block diagram of a microcontroller.

DESCRIPTION OF EMBODIMENTS

(Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. Also note this outline is not an extensive overview of all possible embodiments, and is therefore not intended to limit any constituent indispensable for the embodiments. For convenience, the wording "one embodiment" may be used to designate a single embodiment (Example or Modified Example), or a plurality of embodiments (Examples or Modified Examples) disclosed in the present specification.

1. The controller according to one embodiment is structured to control a variable light distribution lamp. The variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed. The controller is structured to acquire shading information that indicates a shading zone which is a region to be shaded, and to generate the control image in which pixel values of portions corresponding the shading zone among the plurality of first pixels are zero. When pixel values of the first pixels included in the control image gradually change from zero toward a target value, a rate of increase of the pixel values in a first section after a start of gradual change control is relatively lower than a rate of increase of the pixel values in a second period subsequent to the first period.

Within the first period, the pixel value increases slowly, and is thus maintained small. Therefore, the pixel value, even if reset to zero while the shading zone jiggles, will vary only within a small range, and will be less perceptible to the human eyes. This successfully reduces the bother felt by human due to the ADB control.

In one embodiment, a normalized pixel value may be defined as a pixel value normalized by the target value. When the pixel values of the first pixels included in the control image gradually change from zero toward the target value, an increase amount of the normalized pixel value per control period may increase toward a peak value.

In one embodiment, increment of the normalized pixel value per control cycle may decrease from the peak value towards zero.

In one embodiment, the controller may further comprise a lookup table that specifies, per control cycle, a normalized pixel value, the normalized pixel value being referred to as a pixel value normalized with the target value.

In one embodiment, the normalized pixel value may be 10% or smaller, over control cycles from 0 to 5.

In one embodiment, the increment of the normalized pixel value per control time may be 2.5% or smaller, over control cycles from 0 to 5.

In one embodiment, the controller may be structured to generate the control image by multiplying pixel values of a reference image and a scaling image with each other, the reference image defining a distribution of pixel values of the plurality of first pixels corresponding to a basic light distribution in which the shading zone is absent, and the scaling image including a plurality of third pixels whose pixel values range from 0 to 1, and wherein pixel values of the third pixels of the scaling image are the normalized pixel values.

In one embodiment, the controller may further comprise a counter that contains a plurality of count values corresponding to the first pixels, and is structured to cause counting-up per control cycle.

The vehicle lamp apparatus according to one embodiment may have any of the aforementioned controllers, and a variable light distribution lamp.

2. The controller according to one embodiment is structured to control a variable light distribution lamp. The variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed. The controller is structured to acquire shading information indicating a shading zone that is a region to be shaded, to generate the control image in which pixel values of portions corresponding to the shading zone among the plurality of first pixels are zero. A waveform of the pixel values when changing the pixel values of the first pixels included in the control image is selectable.

In a scene where the front vehicle tends to be erroneously detectable, the thus structured controller can control the pixel value according to a waveform that represents slow luminance change, thereby reducing the bother felt by humans due to the ADB control.

In one embodiment, the controller may be structured to select between a first waveform in which a fall transition time when the pixel values change from a non-zero initial value toward zero is relatively short, and a second waveform in which the fall transition time is relatively long.

In one embodiment, the fall transition time of the first waveform may be one control cycle.

In one embodiment, the fall transition time of the second waveform may be 3 to 6 control cycles.

In one embodiment, the pixel value of the second waveform may decrease in an accelerated manner. This more successfully reduces the bother given typically to the driver, as compared with the linear second waveform that spans the same fall transition time.

In one embodiment, the controller may be structured to select, when the pixel values change from zero toward a non-zero target value, between a third waveform in which a rise transition time until reaching 90% of the target value is relatively short, and a fourth waveform in which the rise transition time is relatively long.

In one embodiment, in the third waveform, a rate of increase of the pixel values in a first period after a start of gradual change control may be relatively lower than a rate of increase of the pixel values in a second period subsequent to the first period. Within the first period, the pixel value increases slowly, and is thus maintained small. Therefore, the pixel value, even if reset to zero while the shading zone jiggles, will vary only within a small range, and will be less perceptible to the human eyes. This successfully reduces the bother felt by human due to the ADB control.

In one embodiment, the controller may be structured to generate a first waveform having a relatively short fall transition time and a second waveform having a relatively long fall transition time when the pixel values change from a non-zero initial value toward zero. The controller may be structure to generate a third waveform having a relatively short rise transition time until reaching 90% of a target value and a fourth waveform having a relatively long rise transition time when the pixel values change from zero toward the non-zero target value. The controller may be switchable between a first mode in which the pixel values are decreased according to the first waveform and then increased according to the third waveform, and a second mode in which the pixel values are decreased according to the second waveform and then increased according to the fourth waveform. In a scene where the front car tends to be erroneously detectable, choice of the second mode can reduce the bother felt by human.

In one embodiment, a normalized pixel value may be defined as a pixel value normalized by the target value. When the pixel values of the first pixels included in the control image gradually change from zero toward the target value, an increase amount of the normalized pixel value per control period may increase toward a peak value.

In one embodiment, increment of the normalized pixel value per control cycle may decrease from the peak value towards zero.

In one embodiment, the controller may further comprise a lookup table that specifies, per control cycle, a normalized pixel value, the normalized pixel value being referred to as a pixel value normalized with the target value.

In one embodiment, the normalized pixel value may be 10% or smaller, over control cycles from 0 to 5.

In one embodiment, the increment of the normalized pixel value per control time may be 2.5% or smaller, over control cycles from 0 to 5.

In one embodiment, the controller may be structured to generate the control image by multiplying pixel values of a reference image and a scaling image with each other, the reference image defining a distribution of pixel values of the plurality of first pixels corresponding to a basic light distribution in which the shading zone is absent, and the scaling image including a plurality of third pixels whose pixel values range from 0 to 1, and wherein pixel values of the third pixels of the scaling image are the normalized pixel values.

In one embodiment, the controller may further comprise a counter that contains a plurality of count values corresponding to the first pixels, and may be structured to cause counting-up per control cycle.

The vehicle lamp apparatus according to one embodiment may have any of the aforementioned controllers, and a variable light distribution lamp.

3. The controller according to one embodiment is structured to control a variable light distribution lamp. The variable light distribution lamp includes a plurality of light-emitting pixels and is structured to irradiate, with a beam having an intensity distribution corresponding to a luminance distribution of the plurality of the light-emitting pixels, a region where a high beam light distribution is to be formed. The controller may be structured to acquire information indicating a region of interest (ROI), to turn off a plurality of the light-emitting pixels corresponding to the ROI, and, when increasing luminance of the light-emitting pixels from zero toward a target value due to movement of the ROI, to change pixel values of the light-emitting pixels according to different control waveforms depending on a relative positional relationship with the ROI.

The light-emitting pixel means a unit for which the luminance is controlled. Therefore, for the variable light distribution lamp constituted by an array of the light-emitting elements, each of such light-emitting elements corresponds to the light-emitting pixel. Meanwhile for the variable light distribution lamp constituted by a spatial light modulator such as a digital mirror device (DMD) or a liquid crystal device, every single pixel of them corresponds to the light-emitting pixel.

The vehicle ROI shifts up and down, and left and right. Upon shifting of the vehicle ROI in a certain direction, an area on the opposite side in the shift direction, having been contained in the shading zone, will quit the shading zone, raising the need for elevating the luminance of the light-emitting pixels in such area. In this situation, change of the luminance according to a sharp waveform, regardless of the direction of shift of the vehicle ROI, would be more likely to give glare, while an erroneous vehicle ROI occurs or the vehicle ROI jiggles. On the contrary, change of the luminance according to a gentle waveform, regardless of the direction of shift of the vehicle ROI, would darken the area which should actually be illuminated. According to the aforementioned structure, the luminance is changed according to different control waveforms, depending on the relative positional relationship between the light-emitting pixel and the vehicle ROI, so that the brightness of the area which should be illuminated can be restored in a short time, while suppressing glare.

In one embodiment, when luminance of the light-emitting pixels is increased from zero toward a target value due to movement of the ROI, a control waveform applied to the light-emitting pixels located on a lower-end side of the ROI may have a relatively high rate of increase, and a control waveform applied to the light-emitting pixels located on an upper-end side of the ROI may have a relatively low rate of increase. Upon upward shift of the vehicle ROI, there arises a process of increasing the luminance of the light-emitting pixel located in the lower end area of the vehicle ROI. The lower end area of the vehicle ROI in this case is given by a road face, so that the road face may be illuminated quickly and brightly, by accelerating the rate of increase of the pixel value.

In one embodiment, when luminance of the light-emitting pixels is increased from zero toward a target value due to movement of the ROI, a control waveform applied to the light-emitting pixels located on a right-end side or a left-end side of the ROI may have the same rate of increase as a control waveform applied to the light-emitting pixels located on an upper-end side of the ROI.

In one embodiment, when luminance of the light-emitting pixels is increased from zero toward a target value due to movement of the ROI, a control waveform applied to the light-emitting pixels located on a right-end side or a left-end side of the ROI may have the same rate of increase as a control waveform applied to the light-emitting pixels located on a lower-end side of the ROI.

In one embodiment, the controller may further comprise a lookup table that stores the waveform as a normalized luminance value for each control cycle, wherein the normalized luminance value is defined as a luminance normalized with respect to the target value.

In one embodiment, the controller may be structured to generate luminance values of the light-emitting pixels, by multiplying pixel values in a reference image that specifies a distribution of luminance values of the light-emitting pixels corresponding to a basic light distribution in the absence of the region of interest, and corresponding pixel values in a scaled image that contains a plurality of pixels having pixel values of 0 to 1.

The vehicle lamp apparatus according to one embodiment may have any of the aforementioned controllers, and a variable light distribution lamp.

The controller according to one embodiment is structured to control a variable light distribution lamp. The variable light-distribution lamp includes a plurality of light-emitting pixels and is structured to irradiate a region in which a high-beam light distribution is to be formed with portions of light having an intensity distribution corresponding to a luminance distribution of the plurality of light-emitting pixels. The controller is structured to: acquire information indicating a region of interest (ROI), and select, as a plurality of off pixels, ones of the plurality of light-emitting pixels corresponding to the ROI such that a shading portion is formed corresponding to the ROI. The controller is structured to detect a tilt angle of a vehicle body, and dynamically shift positions of the plurality of off pixels in an up-down direction such that a position of the shading portion changes according to the tilt angle. The light-emitting pixels that change from off to on as a result of dynamically shifting the positions of the plurality of off pixels is referred to as turn-on pixels. A transition time of a luminance of the turn-on pixels located on a lower-end side of the ROI is shorter than a transition time of a luminance of the turn-on pixels located on an upper-end side of the ROI.

The light-emitting pixel means a unit for which the luminance is controlled. Therefore, for the variable light distribution lamp constituted by an array of the light-emitting elements, each of such light-emitting elements corresponds to the light-emitting pixel. Meanwhile for the variable light distribution lamp constituted by a spatial light modulator such as a digital mirror device (DMD) or a liquid crystal device, every single pixel of them corresponds to the light-emitting pixel.

The dynamic electronic optical axis correction shifts the OFF pixels in a vertical direction. Upon shifting of the OFF pixels in a certain direction, an area on the opposite side in the shift direction, having been contained in the shading zone, will quit the shading zone, raising the need for elevating the luminance of the light-emitting pixels in such area (turn-ON pixels). In this situation, increase of the luminance of the turn-ON pixels sharply in a short time, regardless of the location of the turn-ON pixels, will be more likely to cast glare to the front vehicle, if the angle of inclination were erroneously detected. On the contrary, increase of the luminance of the turn-ON pixels slowly over a long time, regardless of the position of the turn-ON pixels, will form a dark zone below the shading zone. According to the aforementioned structure, the luminance of the turn-ON pixels, if located above the region of interest, may be increased over a relatively long transition time, thereby suppressing glare. On the contrary, the luminance of the turn-ON pixels, if located below the region of interest, may be increased within a relatively short transition time, thereby suppressing formation of the dark zone below the shading zone.

In one embodiment, the luminance of the turn-ON pixels, normalized by the target value when transitioned from zero to a target value, is defined as normalized luminance value. The controller may comprise a lookup table that stores a first waveform defining, for the turn-on pixels located on an upper-end side of the ROI, the normalized luminance value for each control cycle.

In one embodiment, for the turn-on pixels located on a lower-end side of the ROI, the luminance may be increased from zero to the target value within one control cycle without referring to the first waveform.

In one embodiment, the lookup table may further store a second waveform defining, for the turn-on pixels located on a lower-end side of the ROI, the normalized luminance value for each control cycle.

In one embodiment, the controller may be structured to generate luminance values of the plurality of light-emitting pixels by multiplying, pixel value by pixel value, a reference image defining a distribution of luminance values of the plurality of light-emitting pixels corresponding to a basic light distribution in which no ROI exists, and a scaling image including a plurality of pixels having pixel values ranging from 0 to 1.

The vehicle lamp apparatus according to one embodiment may have any of the aforementioned controllers, and a variable light distribution lamp.

(Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the disclosure. All features and combinations thereof described in the embodiments are not always essential to the disclosure.

(Embodiment 1)

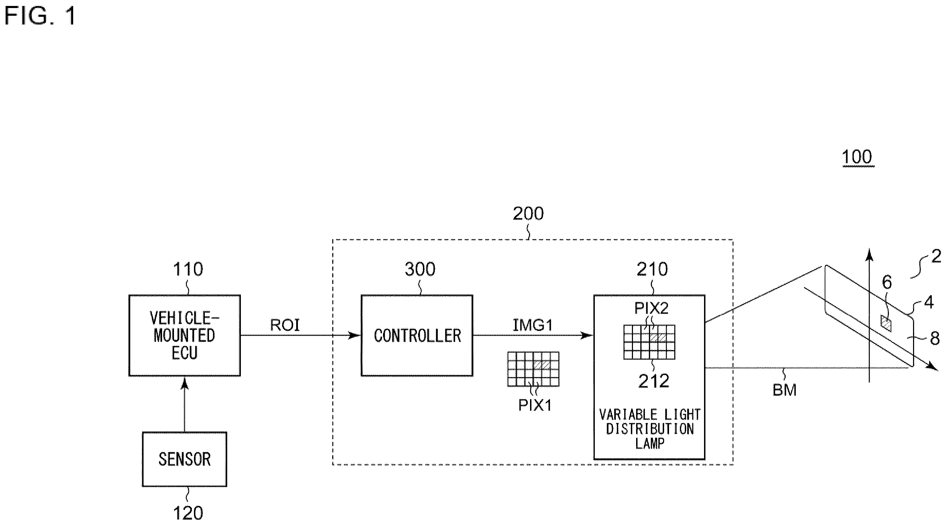

Fig. 1 is a block diagram illustrating a lamp system 100 of Embodiment 1. The lamp system 100 is mounted on an automobile, and functions as a headlamp structured to illuminate a field of view ahead of the vehicle. The lamp system 100 has an ADB function designed to shade an area where the oncoming vehicle and the preceding car (collectively referred to as front vehicle, hereinafter) reside, according to a situation ahead of the vehicle in the high beam mode.

Fig. 1 illustrates a virtual perpendicular screen 2, on which a high beam light distribution 4 is schematically illustrated. The high beam light distribution 4 contains a shading zone 6 whose illuminance is substantially zero, in a range where the front car resides. Since the position of the front car changes from moment to moment, the lamp system 100 controls the position of the shading zone 6 so as to follow the front car. A zone other than the shading zone 6 will be referred to as an illumination zone 8. That is, the high beam light distribution 4 contains the shading zone 6 and the illumination zone 8.

The lamp system 100 has a vehicle lamp apparatus 200, a vehicle ECU 110, and a sensor 120. The sensor 120 is typically a camera or LiDAR, structured to sense a situation ahead of the vehicle. The vehicle electronic control unit (ECU) 110 is structured to detect the front vehicle with reference to an output from the sensor 120, and to generate vehicle ROI information (referred to as ROI information, hereinafter) that represents a range where the front car resides, in other words, the shading zone.

The ROI information contains location information regarding left end, right end, upper end, and lower end of the shading zone. The location information is usually represented by angle.

The ROI information is transmitted from the vehicle ECU 110, through a vehicle bus such as controller area network (CAN) or local interconnect network (LIN), to the vehicle lamp apparatus 200. The vehicle lamp apparatus 200 is responsible for the ADB control with use of the ROI information, during the high beam illumination.

The vehicle lamp apparatus 200 has a variable light distribution lamp 210, and a controller 300. The variable light distribution lamp 210 has a light-emitting device 212. The light-emitting device 212 is typically an LED array, and contains a plurality of second pixels PIX2. The luminance values of the second pixels PIX2 are set according to the pixel values of the plurality of first pixels PIX1 contained in the control image IMG1 generated by the controller 300. The variable light distribution lamp 210 illuminates a region 4 where a high beam light distribution is to be formed on the virtual perpendicular screen 2 ahead of the vehicle, with a beam BM having an intensity distribution corresponding to a luminance distribution of the second pixels PIX2.

The controller 300 generates the control image IMG1 that defines the high beam light distribution, with reference to the ROI information. Among the plurality of first pixels PIX1 that constitute the control image IMG1, those in an area that correspond to the ROI, that is, those in an area that correspond to the shading zone 6 have a pixel value of zero. The controller 300 updates the control image IMG1 every control cycle T. The control cycle may typically be several tens milliseconds to 100 ms.

The overall structure of the lamp system 100 has been described. With the thus structured lamp system 100, the vehicle ROI during travel jiggles up and down, and left and right. The shading zone, generated with reference to the jiggling vehicle ROI, will consequently jiggle, thus bothering the driver of the host vehicle or drivers of other vehicles.

The gradual change control will now be employed for the purpose of solving the problem. The gradual change control is implemented by the controller 300, independently for every pixel.

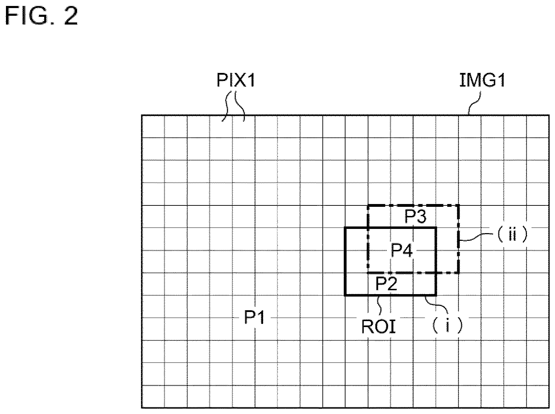

Fig. 2 is a diagram illustrating shift of the vehicle ROI, and the control image IMG1. In the diagram, a solid line rectangle (i) indicates a location of the ROI before shifting, and a dash-dotted line rectangle (ii) indicates a location of the ROI after shifting. The plurality of first pixels PIX1 can be divided into four areas P1 to P4:

- first area P1: outside ROI, both before and after ROI shifting;
- second area P2: inside ROI before ROI shifting, and outside ROI after ROI shifting;
- third area P3: outside ROI before ROI shifting, and inside ROI after ROI shifting; and
- fourth area P4: inside ROI, both before and after ROI shifting.

The controller 300 maintains the pixel values of the first pixels PIX1 contained in the first area P1 and the fourth area P4.

The controller 300 immediately zeros the pixel value of the first pixels PIX1 contained in the third area P3. This can immediately zero the luminance of an area that corresponds to the third area P3 in the high beam light distribution, and can suppress glare to the front vehicle.

The controller 300 implements the gradual change control for the first pixels PIX1 contained in the second area P2. The pixel values of the first pixels PIX1 contained in the second area P2 will gradually change with time, from 0 towards a target value X.

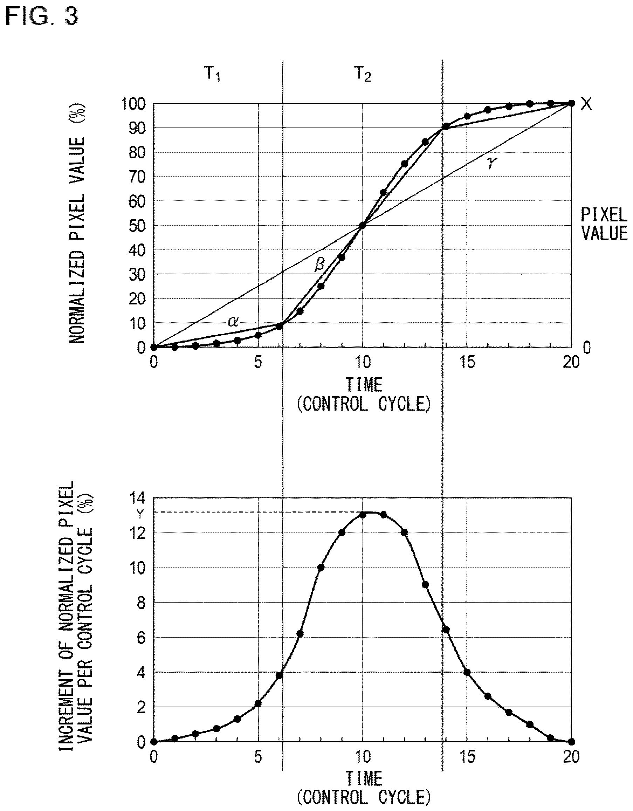

Fig. 3 is a diagram illustrating characteristics of the gradual change control according to Embodiment 1.

The upper tier of Fig. 3 illustrates the pixel values of the first pixels PIX1 contained in the second area P2, and the lower tier illustrates increment of the pixel values per control.

The abscissa plots time expressed in control cycles. The left ordinate plots the pixel value normalized by a target value X (normalized pixel value). The normalized pixel value finally reaches 100%. The right ordinate plots the pixel value before normalization. The pixel value of the first pixel PIX1 herein is controlled to cause gradual change from zero towards the target value X, over 20 control cycles.

The pixel value of the first pixels PIX1 contained in the control image IMG1 is gradually changed from zero towards the target value X, at a rate of increase (interval average slope $\alpha$) of the pixel value in the first period T1 that follows the start of the gradual change control, relatively lower than a rate of increase (interval average slope $\beta$) of the pixel value in a second period T2 subsequent to the first period T1. Assuming now the rate of increase (slope) of the pixel value over the entire period (20 control cycles) as $\gamma$, then

$$\alpha \; < \; \gamma \; < \; \beta$$

holds.

For example, the first period T1 is a period over which the normalized pixel value increases from 0% up to 10%. The second period T2 may be a period over which the normalized pixel value increases from 10% up to 90%, or may be a period over which the normalized pixel value increases from 10% up to 100%.

Alternatively, the first period T1 may be a period over which the normalized pixel value increases from 0% up to 20%. The second period T2 may be a period over which the normalized pixel value increases from 20% up to 80%, a period over which the normalized pixel value increases from 20% up to 90%, or a period over which the normalized pixel value increases from 20% up to 100%.

That is, while setting a freely selectable threshold between 10% and 20% for the normalized pixel value, the first period T1 may be defined by a period until the normalized pixel value reaches the threshold, and the second period T2 comes thereafter.

An example illustrated in Fig. 3 teaches that increment of the normalized pixel value per control cycle gradually increases from zero towards a peak value Y. The increment then gradually decreases from the peak value Y down to zero.

The normalized pixel value is preferably 10% or smaller, over control cycles from 0 to 5. Meanwhile, the increment of the normalized pixel value per control time is preferably 2.5% or smaller, over control cycles from 0 to 5.

The structure of the controller 300 has been described. Advantages of the controller 300 will be clarified by comparison with a comparative technique. The comparative technique will now be described.

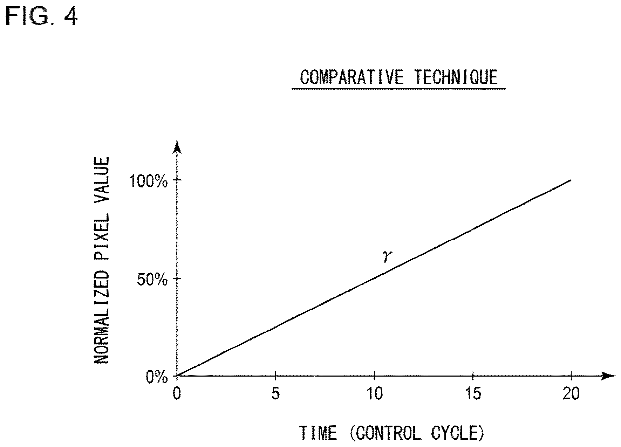

Fig. 4 is a diagram illustrating a characteristic of the gradual change control according to the comparative technique. The comparative technique increases the normalized pixel value from 0% to 100%, with a constant slope $\gamma$.

A problem possibly caused by the comparative technique will be described.

Reference will now be made on Fig. 2. Consider now a case where the ROI jiggles, thereby causing shift between locations indicated by solid line (i) and dash-dotted line (ii). Pixel values in the third area P3 in this case will be focused on.

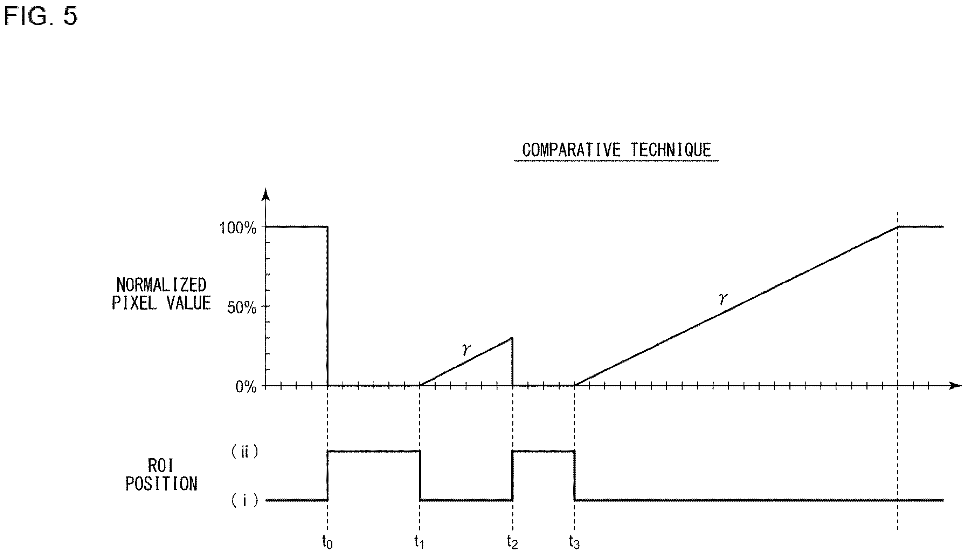

Fig. 5 is a diagram illustrating the normalized pixel values of the third area P3, under employment of the gradual change control according to the comparative technique. Before time $t_0$, the ROI falls on solid line (i). The third area P3 at this time falls outside the ROI, and has a normalized pixel value of 100%. At time $t_0$, the ROI shifts to solid line (ii). The third area P3 now falls in the ROI, and will have a normalized pixel value of 0%.

At time $t_1$, the ROI returns back to solid line (i). According to the comparative technique, the normalized pixel value elevates from 0%, at a constant rate $\gamma$ every control cycle.

Upon shifting of the ROI to solid line (ii) at time $t_2$, the normalized pixel value drops to 0%.

At time $t_3$, the ROI returns back to solid line (i). The normalized pixel value elevates from 0% at the constant rate $\gamma$ every control cycle. Fluctuation is kept suppressed at time $t_3$ and thereafter, during which the normalized pixel value elevates up to 100%.

The comparative technique has allowed the normalized pixel value to increase to some extent, over the period between $t_1$ and $t_2$ under fluctuation of the ROI. According to the example of Fig. 5, the normalized pixel value increases up to 30% at time $t_2$, which is perceivable to human eyes as a bright area. The third area P3 in Fig. 2 will therefore appear to blink, which can bother the human eyes. This is the problem occurs in the comparative technique.

Returning now back to Embodiment 1 to describe the operation.

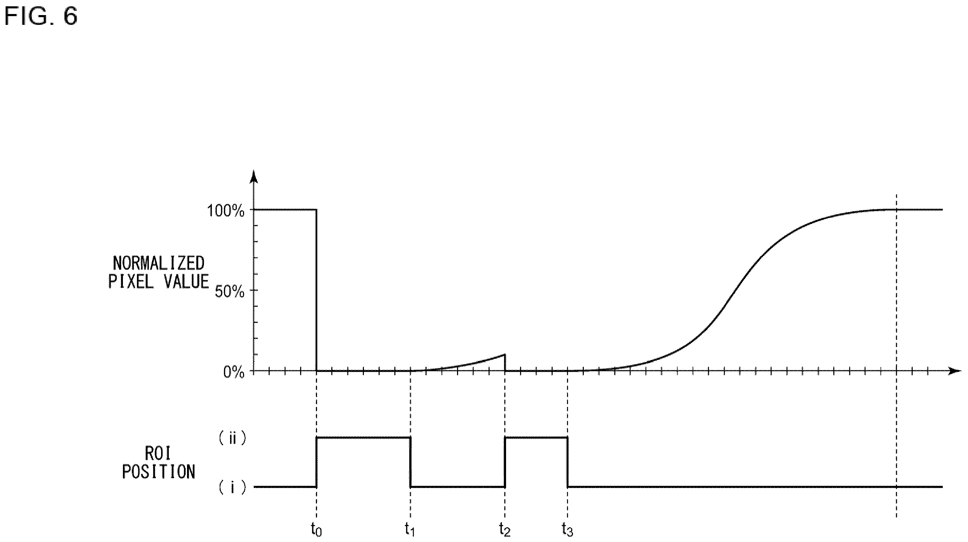

Fig. 6 is a diagram illustrating the normalized pixel values of the third area P3, under employment of the gradual change control according to Embodiment 1. The ROI shifts similarly to as in the comparative technique illustrated in Fig. 5.

Before time $t_0$, the ROI falls on solid line (i). The third area P3 at this time falls outside the ROI, and has a normalized pixel value of 100%. At time $t_0$, the ROI shifts to solid line (ii). The third area P3 now falls in the ROI, and will have a normalized pixel value of 0%.

At time $t_1$, the ROI returns back to solid line (i). The comparative technique has allowed the normalized pixel value to elevate from 0% every control cycle, according to the control characteristic illustrated in Fig. 3.

Upon shifting of the ROI to solid line (ii) at time $t_2$, the normalized pixel value drops to 0%.

At time $t_3$, the ROI returns back to solid line (i). The normalized pixel value increases from 0% every control cycle, according to the control characteristic illustrated in Fig. 3. Fluctuation is kept suppressed at time $t_3$ and thereafter, during which the normalized pixel value elevates up to 100%.

In Embodiment 1, the normalized pixel value is maintained small over the period between $t_1$ and $t_2$ under fluctuation of the ROI, without perceivable increase. In the example illustrated in Fig. 5, the normalized pixel value only reaches 10% or below at time $t_2$, which is perceivable to human eyes as a dark area. The third area P3 in Fig. 2 will therefore be kept dark without blinking, even if the ROI fluctuates. This can prevent the human eyes from being bothered.

The present disclosure encompasses various apparatuses and methods derived from the foregoing explanations, without being limited to any specific structure. Hereinafter, more specific exemplary structures and Examples will be described to help understanding or to clarify the spirit or operations of the present disclosure, without narrowing the scope of the present disclosure.

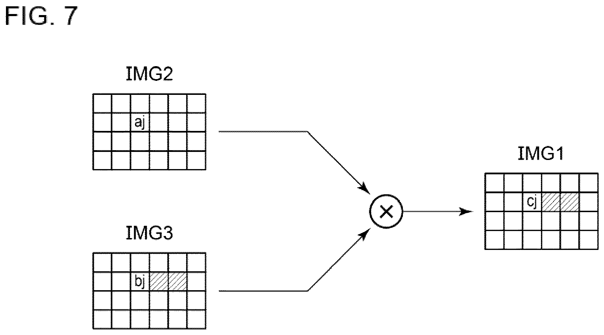

Fig. 7 is a diagram explaining creation of the control image by the controller 300. The controller 300 generates the control image IMG1, by multiplying corresponding pixel values in the reference image IMG2 and in the scaled image IMG3. Assuming now a pixel value of a certain pixel of the reference image IMG2 as $a_j$, a pixel value of a corresponding pixel of the scaled image IMG3 as $b_j$, and a pixel value of a corresponding pixel of the control image IMG1 as $c_j$, then

$$c_j = a_j \times b_j$$

holds.

The reference image IMG2 specifies an illuminance distribution of the basic light distribution in the absence of the shading zone. In other words, the reference image IMG2 specifies the pixel values of the first pixels in the absence of the shading zone.

The scaled image IMG3 contains a plurality of third pixels having pixel values of 0 to 1. The pixel value of the third pixels of the scaled image IMG3 is a normalized pixel value in the gradual change control.

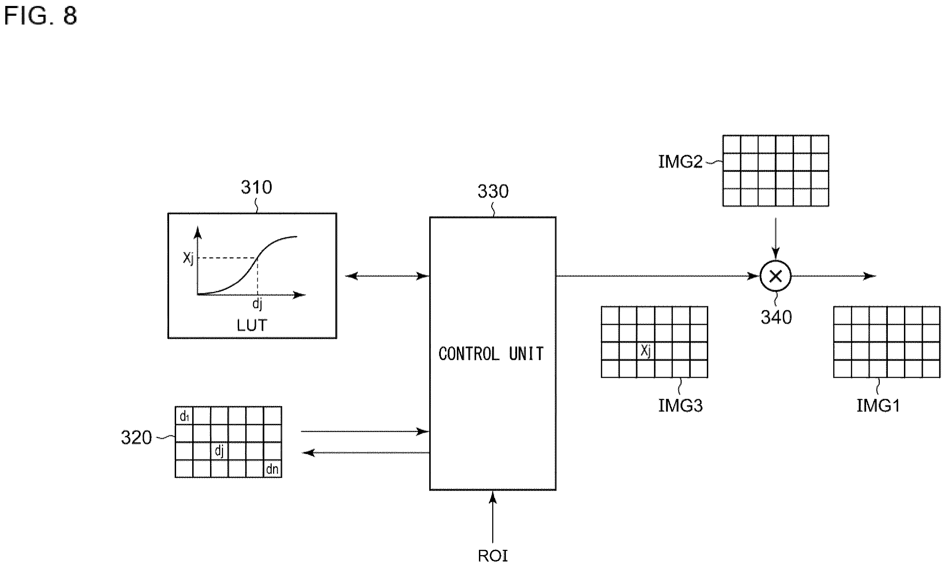

Fig. 8 is a functional block diagram of the controller 300. The controller 300 may be implemented by a microcontroller that contains a processor on which a program can run. The block diagram in Fig. 8 therefore illustrates functions implemented by the program, in other words, processes that the program causes the processor to execute, as well as data described in the program, rather than a hardware configuration of the controller 300.

The controller 300 has a lookup table 310, a counter 320, a control unit 330, and a multiplier 340. The lookup table 310 presents the control characteristics illustrated in the upper tier of Fig. 3, that is, relationship between the control cycle and the normalized pixel value.

The counter 320 is allowed for independent count control for every first pixel PIX1. Given the number of pixels of the control image IMG1 is n, the counter 320 can maintain n count values $d_1$ to $d_n$. The counter 320 increments the n count values $d_1$ to $d_n$ every control cycle. Upon shifting of the j-th first pixel PIX1 from outside to inside of the ROI, the control unit 330 resets the j-th count value $d_j$ to 0. The count value $d_j$ is incremented by 1 from 0.

The control unit 330 generates the scaled image IMG3 with reference to the lookup table 310 and the counter 320. When creating the pixel value of the j-th pixel of the scaled image IMG3, the controller acquires the corresponding j-th count value $d_j$ of the counter 320. The controller then refers to the lookup table 310, and reads a normalized pixel value $x_j$ that corresponds to the count value $d_j$. The thus read normalized pixel value $x_j$ will give the pixel value of the j-th pixel of the scaled image IMG3.

The multiplier 340 generates the control image IMG1, by multiplying the pixel values in the reference image IMG2, and the corresponding pixel values in the scaled image IMG3.

An exemplary implementation of the controller 300 has been described.

It is to be understood by those skilled in the art that the aforementioned Embodiment 1 is merely illustrative, and that combinations of the individual constituents or processes may be modified in various ways. Such modified examples will be explained below.

Although having described in Embodiment 1 that the variable light distribution lamp 210 was an LED array, the present disclosure is not limited thereto. For example, the variable light distribution lamp 210 may alternatively be constituted by a combination of a light source, and a spatial light modulator structured to pattern the light emitted from the light source. The spatial light modulator usable herein may be a digital micromirror device (DMD) or a liquid crystal device.

Having described in Embodiment 1 that the controller 300 was implemented by a microcontroller, the controller 300 may alternatively be implemented by a field programmable gate array (FPGA), or an application specific integrated circuit (ASIC).

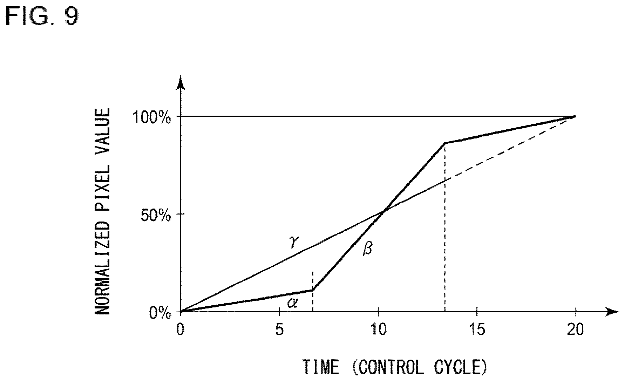

Fig. 9 is a diagram illustrating a characteristic of the gradual change control according to a modified example. The normalized pixel value may alternatively change at a constant slope, as illustrated in Fig. 9. The normalized pixel value in this case may alternatively be calculated every control cycle by simple addition, without referring to the lookup table.

(Embodiment 2)

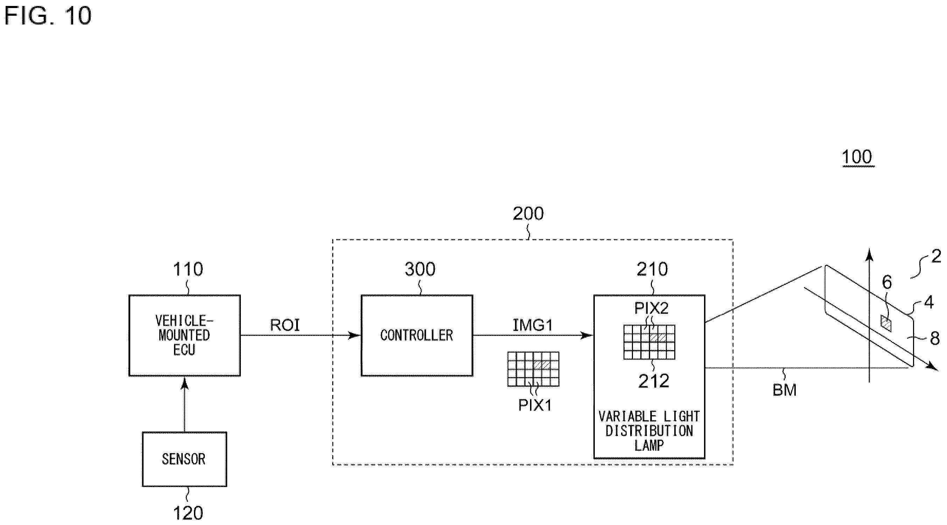

Fig. 10 is a block diagram illustrating the lamp system 100 of Embodiment 2. The lamp system 100 is mounted on an automobile, and functions as a headlamp structured to illuminate a field of view ahead of the vehicle. The lamp system 100 has an ADB function designed to shade an area where the oncoming vehicle and the preceding car (collectively referred to as front vehicle, hereinafter) reside, according to a situation ahead of the vehicle in the high beam mode.

Fig. 10 schematically illustrates the virtual perpendicular screen 2, on which the high beam light distribution 4 is schematically illustrated. The high beam light distribution 4 contains a shading zone 6 whose illuminance is substantially zero, in a range where the front car resides. Since the position of the front car changes from moment to moment, the lamp system 100 controls the position of the shading zone 6 so as to follow the front car. A zone other than the shading zone 6 will be referred to as the illumination zone 8. That is, the high beam light distribution 4 contains the shading zone 6 and the illumination zone 8.

The lamp system 100 has the vehicle lamp apparatus 200, the vehicle ECU 110, and the sensor 120. The sensor 120 is typically a camera or LiDAR, structured to sense a situation ahead of the vehicle. The vehicle electronic control unit (ECU) 110 is structured to detect the front vehicle with reference to an output from the sensor 120, and to generate vehicle ROI information (referred to as ROI information, hereinafter) that represents a range where the front car resides, in other words, the shading zone.

The ROI information contains location information regarding left end, right end, upper end, and lower end of the shading zone. The location information is usually represented by angle.

The ROI information is transmitted from the vehicle ECU 110, through a vehicle bus such as controller area network (CAN) or local interconnect network (LIN), to the vehicle lamp apparatus 200. The vehicle lamp apparatus 200 is responsible for the ADB control with use of the ROI information, during the high beam illumination.

The vehicle lamp apparatus 200 has the variable light distribution lamp 210, and the controller 300. The variable light distribution lamp 210 has the light-emitting device 212. The light-emitting device 212 is typically an LED array, and contains a plurality of second pixels PIX2. The luminance values of the second pixels PIX2 are set according to the pixel values of the plurality of first pixels PIX1 contained in the control image IMG1 generated by the controller 300. The variable light distribution lamp 210 illuminates a region 4 where a high beam light distribution is to be formed on the virtual perpendicular screen 2 ahead of the vehicle, with a beam BM having an intensity distribution corresponding to a luminance distribution of the second pixels PIX2.

The controller 300 generates the control image IMG1 that defines the high beam light distribution, with reference to the ROI information. Among the plurality of first pixels PIX1 that constitute the control image IMG1, those in an area that correspond to the ROI, that is, those in an area that correspond to the shading zone 6 have a pixel value of zero. The controller 300 updates the control image IMG1 every control cycle T. The control cycle T may typically span several tens of milliseconds to 100 ms.

The controller 300 changes the pixel values of the first pixels PIX1 contained in the control image IMG1, according to a predetermined waveform (gradual change control). The waveform of the pixel value is selectable from a plurality of types. The gradual change control is implemented by the controller 300, independently for every pixel.

Upon shifting of a certain first pixel PIX1 from outside to inside of the ROI as a result of shifting of the ROI, the pixel value of this first pixel PIX1 decreases from a non-zero value towards zero. The controller 300 can select a waveform that defines the decrease of the pixel value herein from a plurality of types.

Assuming now, for example, a fall waveform that defines decrease in the pixel value is selectable from a first waveform W1 and a second waveform W2. The first waveform W1 is defined to have a time the pixel value transitions from a non-zero initial value towards zero (fall transition time Tf), relatively shorter than that of the second waveform W2. The first pixels PIX1 in the absence of the shading zone will have different pixel values, depending on positions thereof. The initial value of the pixel value is therefore different from pixel to pixel.

Considering now the fall transition of a certain pixel value, such a value after being normalized by the initial value Z will be referred to as the normalized pixel value. The transition waveforms (W1, W2) under fall transition may be defined with respect to the normalized pixel value.

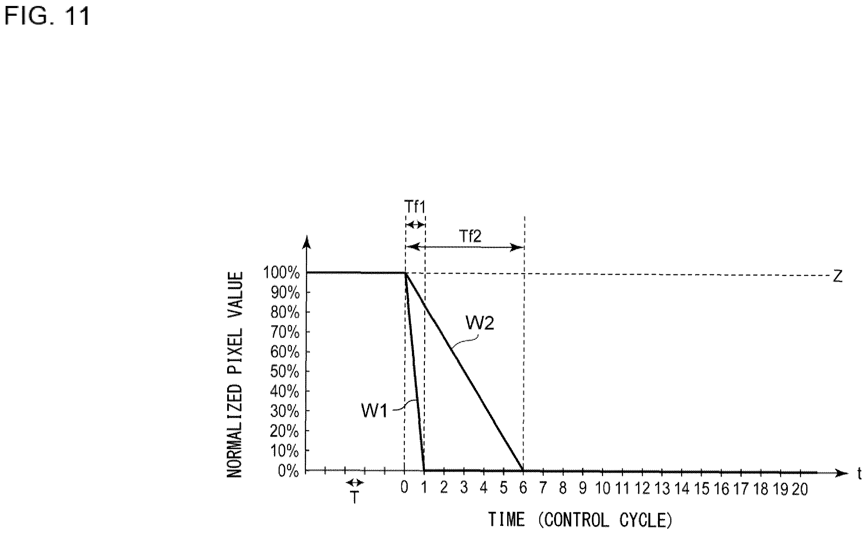

Fig. 11 is a diagram explaining the first waveform W1 and the second waveform W2. The abscissa plots time expressed in control cycles. The left ordinate plots the pixel value normalized by the initial value Z (normalized pixel value) . The normalized pixel value has an initial value of 100%, and a final value of 0%. The right ordinate plots the pixel value before normalization.

The fall transition time Tf1 of the first waveform W1 is given by m control cycles ($m \geq 1$), during which the normalized pixel value decreases from 100% down to 0%, where m = 1 in this example.

The fall transition time Tf2 of the second waveform W2 spans n control cycles ($n \geq m$). For example, n may be 3 to 6 or around. In this example with n = 6, the pixel value decreases from the initial value Z towards zero, over six control cycles. Note, the first waveform W1 and the second waveform W2 are not always necessarily linear, and instead may be defined by a freely selectable curve, as will be described later.

Upon shifting of a certain first pixel PIX1 from inside to outside of the ROI as a result of shifting of the ROI, the pixel value of this first pixel PIX1 increases from zero towards a non-zero value. The controller 300 can select a waveform that defines the increase of the pixel value herein, from a plurality of types.

Assuming now, for example, a rise waveform that defines increase in the pixel value is selectable from a third waveform W3 and a fourth waveform W4. The time the pixel value transitions from zero to reach the threshold of a predetermined normalized pixel value will be referred to as rise transition time Tr. Difference between 100% brightness and 90% brightness is less perceptible to the human eye. The predetermined threshold may therefore be set to be 90%. The threshold value may alternatively be set to 80%.

The third waveform W3 is defined to have the rise transition time Tr, relatively shorter than that of the fourth waveform W4.

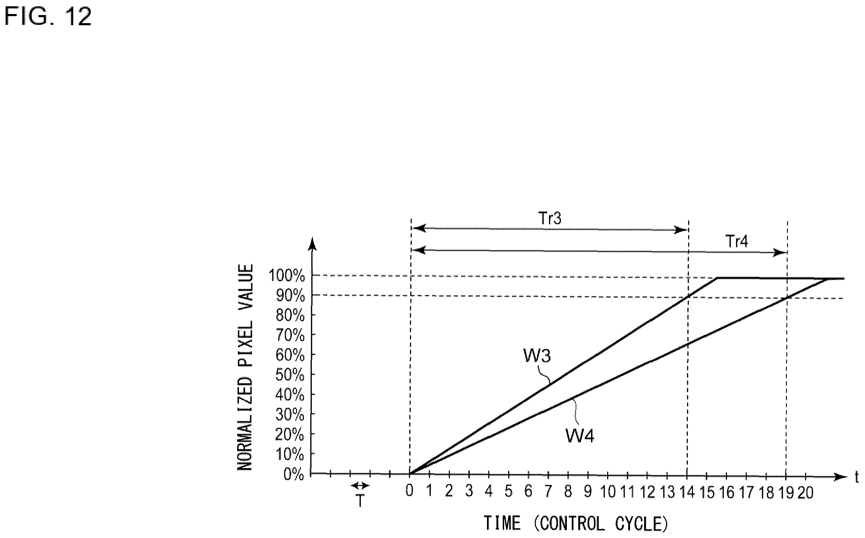

Fig. 12 is a diagram explaining the third waveform W3 and the fourth waveform W4. The abscissa plots time expressed in control cycles. The left ordinate plots the pixel value normalized by a target value X (normalized pixel value). The normalized pixel value has an initial value of 0%, and a final value of 100%. The right ordinate plots the pixel value before normalization. In this example, the rise transition time Tr is given by the time necessary for the normalized pixel value to reach 90%.

In this example, the rise transition time Tr3 of the third waveform W3 spans p control cycles ($p \geq 2$), during which the normalized pixel value rises from 0 up to 90%, where p = 14 in this example.

The rise transition time Tr4 of the fourth waveform W4 spans q control cycles (q > p). In this example with q = 19, the normalized pixel value increases from zero to 90% over 19 control cycles. Note, the first waveform W1 and the second waveform W2 are not always necessarily linear, and instead may be defined by a freely selectable curve, as will be described later.

The structure of the controller 300 has been described. The controller 300 can switch the fall waveform of the pixel values of the first pixels PIX1 when decreased, depending on travel scenes. Similarly, the controller 300 can switch the rise waveform of the pixel values of the first pixels PIX1 when increased, depending on travel scenes.

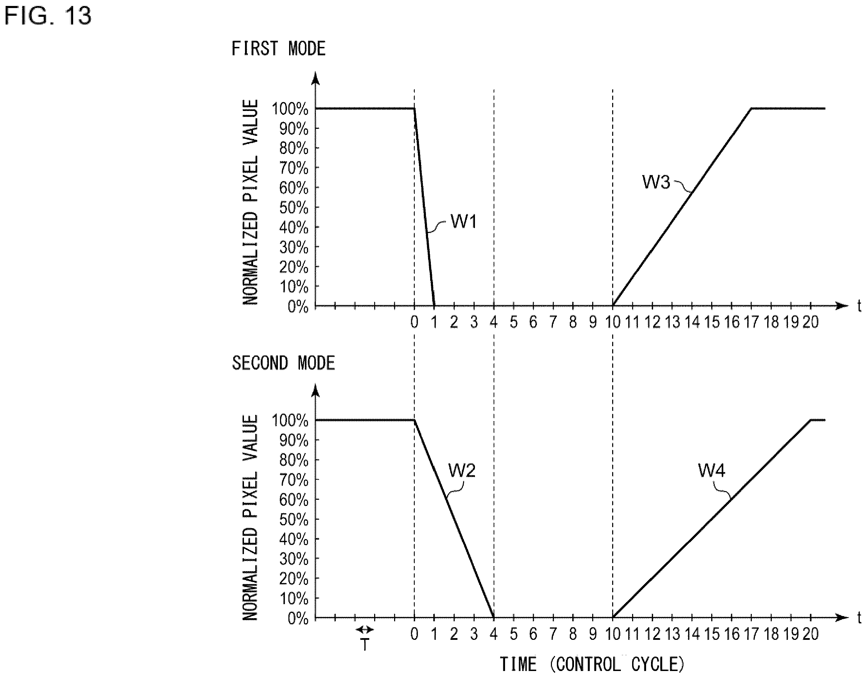

Fig. 13 is a diagram explaining switchover of the gradual change control depending on travel scenes. Illustrated herein are waveforms of the first mode and the second mode correlated to different travel scenes.

The first mode selects the first waveform W1 as the fall waveform, and the third waveform W3 as the rise waveform. The second mode selects the second waveform W2 as the fall waveform, and the fourth waveform W4 as the rise waveform.

The first mode may be selected under high detection accuracy of the ROI by the vehicle ECU 110. Under high detection accuracy of the ROI, and upon shifting of a certain first pixel PIX1 from outside to inside of the ROI as a result of shifting of the ROI, the pixel value of this first pixel PIX1 will be immediately zeroed, thereby successfully suppressing glare possibly cast on the front vehicle that falls in the ROI.

On the other hand, upon shifting of the certain first pixel PIX1 from inside to outside of the ROI as a result of shifting of the ROI, the pixel value of this first pixel PIX1 will be increased within a relatively short time, thereby quickly recovering brightness of the field of view of the driver.

On the contrary, the second mode may be selected under relatively low detection accuracy of the ROI by the vehicle ECU110, that is, in a case where the front vehicle is likely to be erroneously detected.

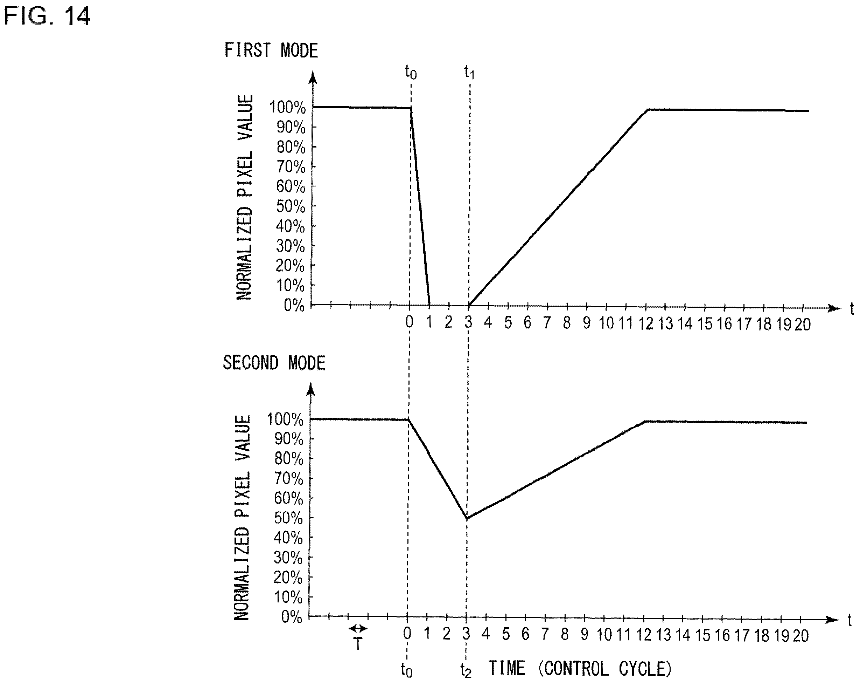

Fig. 14 is a diagram explaining changes in the pixel value of a certain first pixel PIX1, under erroneous detection of ROI. The upper tier of Fig. 14 illustrates a change in the pixel value in the first mode, meanwhile the lower tier illustrates a change in the pixel value in the second mode.

At time $t_0$, there is no ROI, and the normalized pixel value of the first pixel PIX1 is 100%. At time $t_0$, a front vehicle is erroneously detected, and the ROI that contains the first pixels PIX1 is generated. The erroneous detection is rarely sustained for a long time, and will usually return back to a normal state within several control cycles. At time $t_1$, the erroneous detection of the front vehicle is resolved, and the first pixel PIX1 will fall outside the ROI.

According to the first mode, and upon input at time $t_0$ of the ROI based on the erroneous detection, the controller 300 zeros the pixel value of the first pixel PIX1 within a short time (fall transition time Tr1), according to the first waveform W1. Upon input at time $t_1$ of the ROI based on a correct detection result, the controller 300 elevates the first pixel PIX1 according to the third waveform W3. Accordingly, an area that corresponds to the erroneous ROI ahead of the vehicle will have an illuminance of zero, which will then turn back to the previous illuminance. This means that the field of view of the driver will be partially darkened, and is not acceptable. Such erroneous detection of the front vehicle, if repeated, will cause repetitive blinking of the field of view of such area, and will bother the driver.

In contrast in the second mode, upon input at time $t_0$ of the ROI based on an erroneous detection result, the controller 300 will slowly decrease the pixel value of the first pixel PIX1 according to the second waveform W2, over the fall transition time Tr2. Upon input at time $t_1$ of the ROI based on a correct detection result, the controller 300 elevates the first pixel PIX1 according to the fourth waveform W4.

According to the second mode, the pixel value in a period between time $t_0$ and time $t_1$ will decrease only to a small degree, so that the illuminance of an area that corresponds to the erroneous ROI will be kept at a certain level without being zeroed, which will then turn back to the previous illuminance. This successfully prevents the field of view of the driver from being partially darkened. Even if the erroneous detection of the front vehicle is repeated, the field of view of the corresponding area may be prevented from blinking, thus successfully reducing the bother given to the driver.

Next, a method of mode selection will be described. The mode is selectable, typically depending on location where the host vehicle travels. Detection accuracy of the ROI tends to degrade during travel through urban areas. The second mode may therefore be selectable, during travel through urban areas.

Alternatively, the mode is selectable depending on the weather. During rainfall or snowfall, a sensor for detecting the front vehicle will be susceptible to scattering of light, whereby the detection accuracy tends to degrade. The second mode may therefore be selectable in bad weather.

Alternatively, a degree of detection accuracy of the ROI may be estimated, so as to assist selection of the second mode, if the detection accuracy is lower than a certain threshold. The detection accuracy of the ROI may be evaluated by any method not particularly limited. If, for example, the ROI repetitively appears and disappears in the same area, the detection accuracy of the ROI may be judged poor.

Next, specific examples of the individual waveforms will be described.

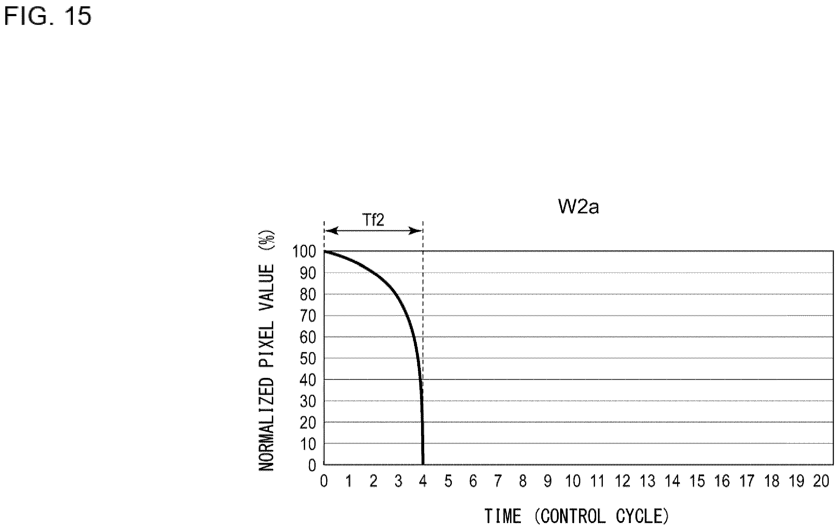

Fig. 15 is a diagram illustrating a second waveform W2a according to one Example. The fall transition time Tf2 of the second waveform W2a spans approximately 4 control cycles, during which fall rate of the normalized pixel value is accelerated. That is, the decrement of the pixel value per control cycle increases every control cycle.

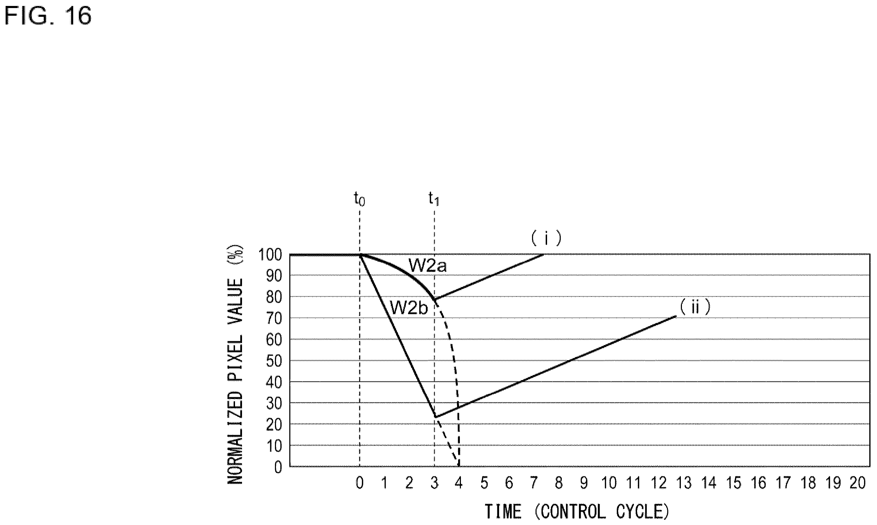

Fig. 16 is a diagram illustrating the gradual change control (i) based on the second waveform W2a in Fig. 15. For comparison, the diagram also presents the gradual change control (ii) based on the second waveform W2b that linearly changes over the fall transition time which equally spans four control cycles.

The ROI erroneously occurs at time $t_0$, and disappears at time $t_1$ which is three control cycles after. If following the linear second waveform W2b, the pixel value will largely decrease in a period between times $t_0$ and $t_1$, thereby darkening a part of the field of view. This also needs longer time to restore the previous brightness, after time $t_1$.

In contrast, if following the acceleratingly falling second waveform W2a, the decrement of the pixel value in a period between times $t_0$ and $t_1$ will be smaller as compared with the case of second waveform W2b, leaving the part of the field of view bright. This also shortens the time to restore the previous brightness, after time t1.

As described above, the second waveform W2a in Fig. 15 can further reduce the bother given to the driver of the host vehicle or the driver of other vehicle, as compared with the linear second waveform W2b.

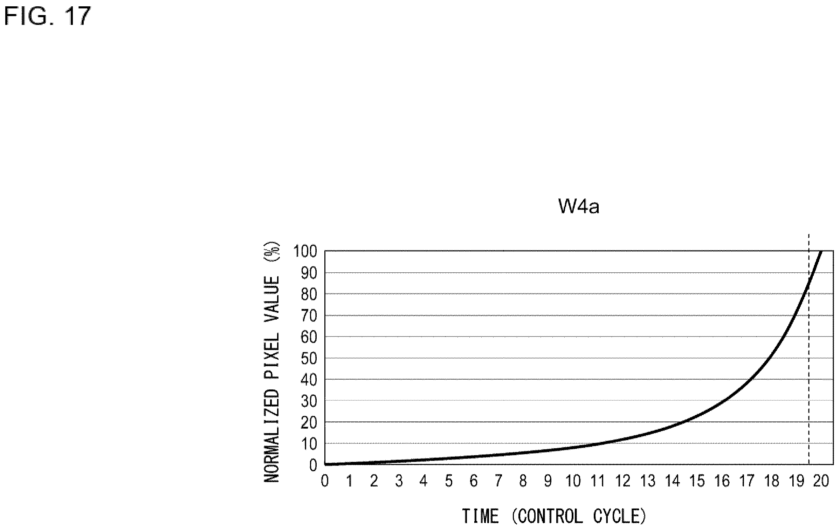

Fig. 17 is a diagram illustrating a fourth waveform W4a according to one Example. The rise transition time Tr4 (90%) of the fourth waveform W4a spans approximately 19 control cycles, during which the rate of increase of the normalized pixel value is accelerated. That is, the increment of the pixel value per control cycle increases every control cycle.

Next, a preferred third waveform W3 will be described.

The vehicle ROI during travel jiggles up and down and left and right. The shading zone, generated with reference to the jiggling vehicle ROI, will consequently jiggle, thus bothering the driver of the host vehicle or drivers of other vehicles.

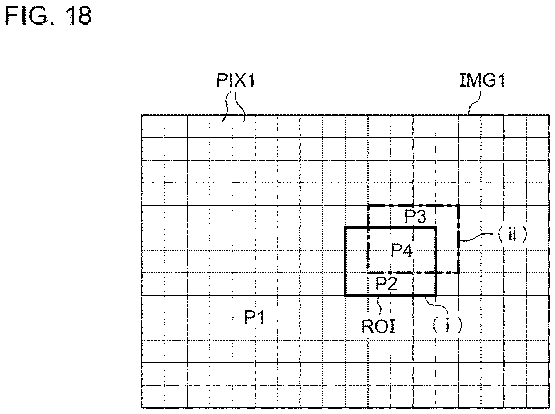

Fig. 18 is a diagram illustrating shift of the vehicle ROI, and the control image IMG1. In the diagram, a solid line rectangle (i) indicates a location of the ROI before shifting, and a dash-dotted line rectangle (ii) indicates a location of the ROI after shifting. The plurality of first pixels PIX1 can be divided into four areas P1 to P4:

- first area P1: outside ROI, both before and after ROI shifting;
- second area P2: inside ROI before ROI shifting, and outside ROI after ROI shifting;
- third area P3: outside ROI before ROI shifting, and inside ROI after ROI shifting; and
- fourth area P4: inside ROI, both before and after ROI shifting.

The controller 300 maintains the pixel values of the first pixels PIX1 contained in the first area P1 and the fourth area P4.

The controller 300 immediately zeros the pixel value of the first pixels PIX1 contained in the third area P3. This can immediately zero the luminance of an area that corresponds to the third area P3 in the high beam light distribution, and can suppress glare to the front vehicle.

The controller 300 implements the gradual change control for the first pixels PIX1 contained in the second area P2. The pixel values of the first pixels PIX1 contained in the second area P2 will gradually change with time, from 0 towards a target value X.

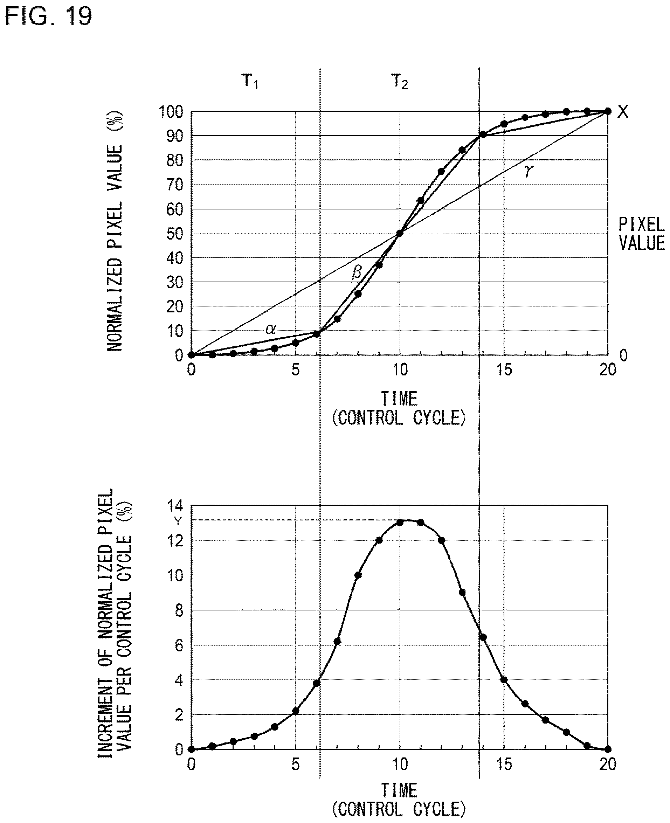

Fig. 19 is a diagram illustrating characteristics (third waveform) of the gradual change control according to Embodiment 2. The upper tier of Fig. 19 illustrates the pixel values of the first pixels PIX1 contained in the second area P2, and the lower tier illustrates increment of the pixel values per control.

The abscissa plots time expressed in control cycles. The left ordinate plots the pixel value normalized by a target value X (normalized pixel value). The normalized pixel value finally reaches 100%. The right ordinate plots the pixel value before normalization. The pixel value of the first pixel PIX1 herein is controlled to cause gradual change from zero towards the target value X, over 20 control cycles.

The pixel value of the first pixels PIX1 contained in the control image IMG1 is gradually changed from zero towards the target value X, at a rate of increase (interval average slope $\alpha$) of the pixel value in the first period T1 that follows the start of the gradual change control, relatively lower than a rate of increase (interval average slope $\beta$) of the pixel value in a second period T2 subsequent to the first period T1. Assuming now the rate of increase (slope) of the pixel value over the entire period (20 control cycles) as $\gamma$, then

$$\alpha < \gamma < \beta$$

holds.

For example, the first period T1 is a period over which the normalized pixel value increases from 0% up to 10%. The second period T2 may be a period over which the normalized pixel value increases from 10% up to 90%, or may be a period over which the normalized pixel value increases from 10% up to 100%.

Alternatively, the first period T1 may be a period over which the normalized pixel value increases from 0% up to 20%. The second period T2 may be a period over which the normalized pixel value increases from 20% up to 80%, a period over which the normalized pixel value increases from 20% up to 90%, or a period over which the normalized pixel value increases from 20% up to 100%.

That is, while setting a freely selectable threshold between 10% and 20% for the normalized pixel value, the first period T1 may be defined by a period until the normalized pixel value reaches the threshold, and the second period T2 comes thereafter.

An example illustrated in Fig. 19 teaches that the increment of the normalized pixel value per control cycle gradually increases from 0 toward the peak value Y. The increment then gradually decreases from the peak value Y down to zero.

The normalized pixel value is preferably 10% or smaller, over control cycles from 0 to 5. Meanwhile, the increment of the normalized pixel value per control time is preferably 2.5% or smaller, over control cycles from 0 to 5.

The structure of the controller 300 has been described. Advantages of the controller 300 will be clarified by comparison with the comparative technique. The comparative technique will now be described.

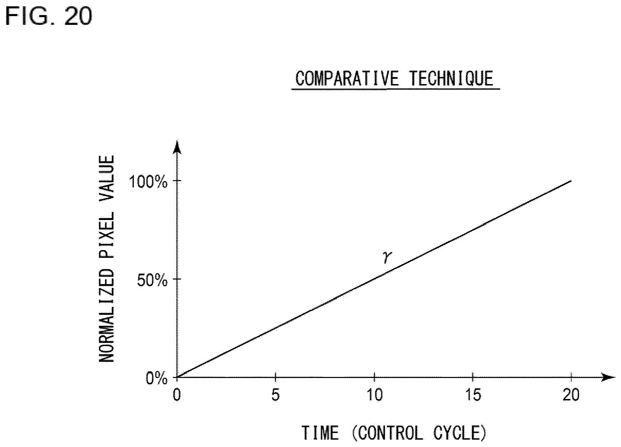

Fig. 20 is a diagram illustrating a characteristic of the gradual change control according to the comparative technique. The comparative technique increases the normalized pixel value from 0% to 100%, with a constant slope $\gamma$.

A problem possibly caused by the comparative technique will be described.

Reference will now be made on Fig. 18. Consider now a case where the ROI jiggles, thereby causing shift between locations indicated by solid line (i) and dash-dotted line (ii). Pixel values in the third area P3 in this case will be focused on.

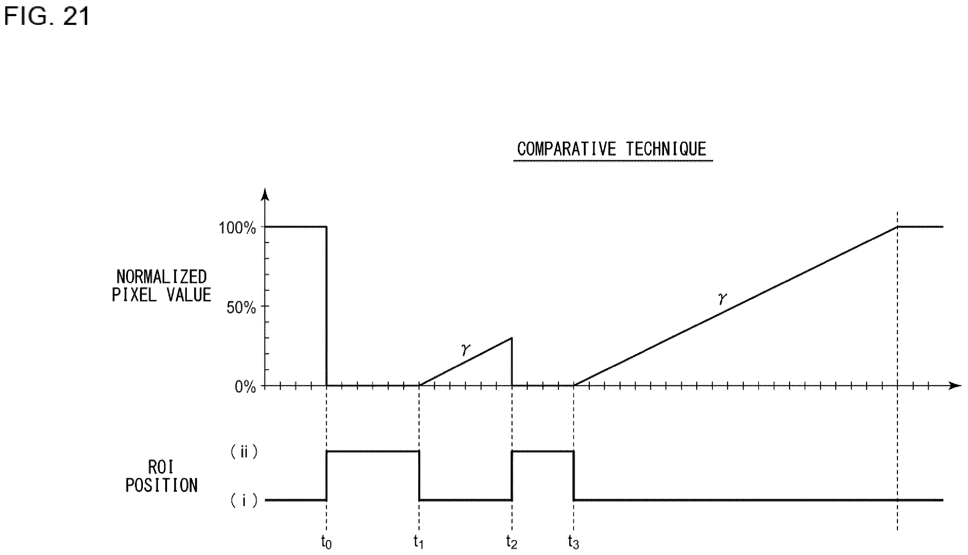

Fig. 21 is a diagram illustrating the normalized pixel values of the third area P3, under employment of the gradual change control according to the comparative technique. Before time $t_0$, the ROI falls on solid line (i).

The third area P3 at this time falls outside the ROI, and has a normalized pixel value of 100%. At time $t_0$, the ROI shifts to solid line (ii). The third area P3 now falls in the ROI, and will have a normalized pixel value of 0%.

At time $t_1$, the ROI returns back to solid line (i). According to the comparative technique, the normalized pixel value elevates from 0%, at a constant rate $\gamma$ every control cycle.

Upon shifting of the ROI to solid line (ii) at time $t_2$, the normalized pixel value drops to 0%.

At time $t_3$, the ROI returns back to solid line (i). The normalized pixel value elevates from 0% at the constant rate $\gamma$ every control cycle. Fluctuation is kept suppressed at time $t_3$ and thereafter, during which the normalized pixel value elevates up to 100%.

The comparative technique has allowed the normalized pixel value to increase to some extent, over the period between $t_1$ and $t_2$ under fluctuation of the ROI. According to the example of Fig. 21, the normalized pixel value increases up to 30% at time $t_2$, which is perceivable to human eyes as a bright area. The third area P3 in Fig. 18 will therefore appear to blink, which can bother the human eyes. This is the problem occurs in the comparative technique.

Returning now back to Embodiment 2 to describe the operation.

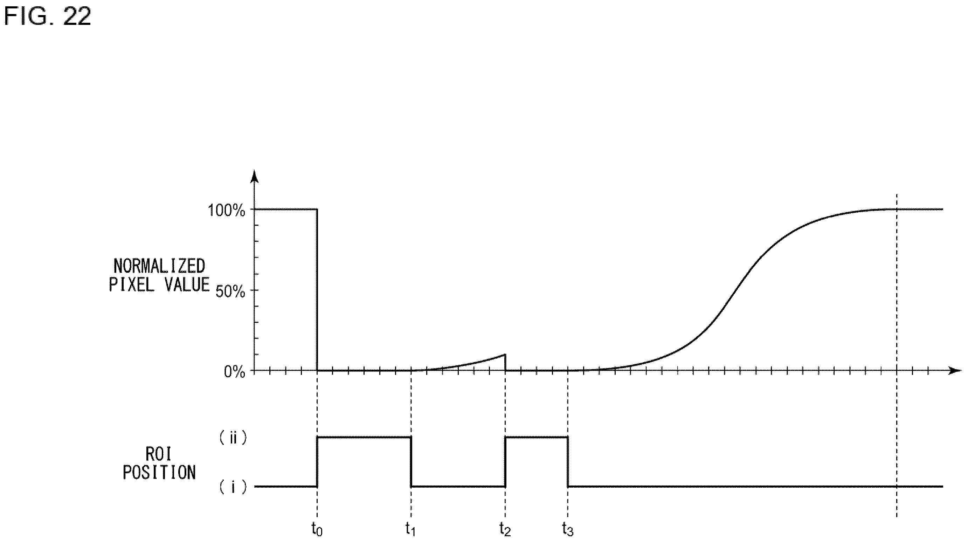

Fig. 22 is a diagram illustrating the normalized pixel values of the third area P3, under employment of the gradual change control according to Embodiment 2. The ROI shifts similarly to as in the comparative technique illustrated in Fig. 21.

Before time $t_0$, the ROI falls on solid line (i). The third area P3 at this time falls outside the ROI, and has a normalized pixel value of 100%. At time $t_0$, the ROI shifts to solid line (ii). The third area P3 now falls in the ROI, and will have a normalized pixel value of 0%.

At time $t_1$, the ROI returns back to solid line (i). The comparative technique has allowed the normalized pixel value to elevate from 0% every control cycle, according to the control characteristic illustrated in Fig. 19.

Upon shifting of the ROI to solid line (ii) at time $t_2$, the normalized pixel value drops to 0%.

At time $t_3$, the ROI returns back to solid line (i). The normalized pixel value elevates from 0% every control cycle, according to the control characteristic illustrated in Fig. 19. Fluctuation is kept suppressed at time $t_3$ and thereafter, during which the normalized pixel value elevates up to 100%.

In Embodiment 2, the normalized pixel value is maintained small over the period between $t_1$ and $t_2$ under fluctuation of the ROI, without perceivable increase. In the example illustrated in Fig. 21, the normalized pixel value only reaches 10% or below at time $t_2$, which is perceivable to human eyes as a dark area. The third area P3 in Fig. 18 will therefore be kept dark without blinking, even if the ROI fluctuates. This can prevent the human eyes from being bothered.

The present disclosure encompasses various apparatuses and methods derived from the foregoing explanations, without being limited to any specific structure. Hereinafter, more specific exemplary structures and Examples will be described to help understanding or to clarify the spirit or operations of the present disclosure, without narrowing the scope of the present disclosure.

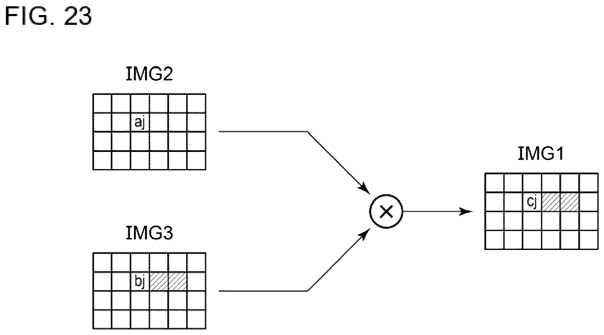

Fig. 23 is a diagram explaining creation of the control image by the controller 300. The controller 300 generates the control image IMG1, by multiplying corresponding pixel values in the reference image IMG2 and in the scaled image IMG3. Assuming now a pixel value of a certain pixel of the reference image IMG2 as $a_j$, a pixel value of a corresponding pixel of the scaled image IMG3 as $b_j$, and a pixel value of a corresponding pixel of the control image IMG1 as $c_j$, then

$$c_j = a_j \times b_j$$

holds.

The reference image IMG2 specifies an illuminance distribution of the basic light distribution in the absence of the shading zone. In other words, the reference image IMG2 specifies the pixel values of the first pixels in the absence of the shading zone.

The scaled image IMG3 contains a plurality of third pixels having pixel values of 0 to 1. The pixel value of the third pixels of the scaled image IMG3 is a normalized pixel value in the gradual change control.

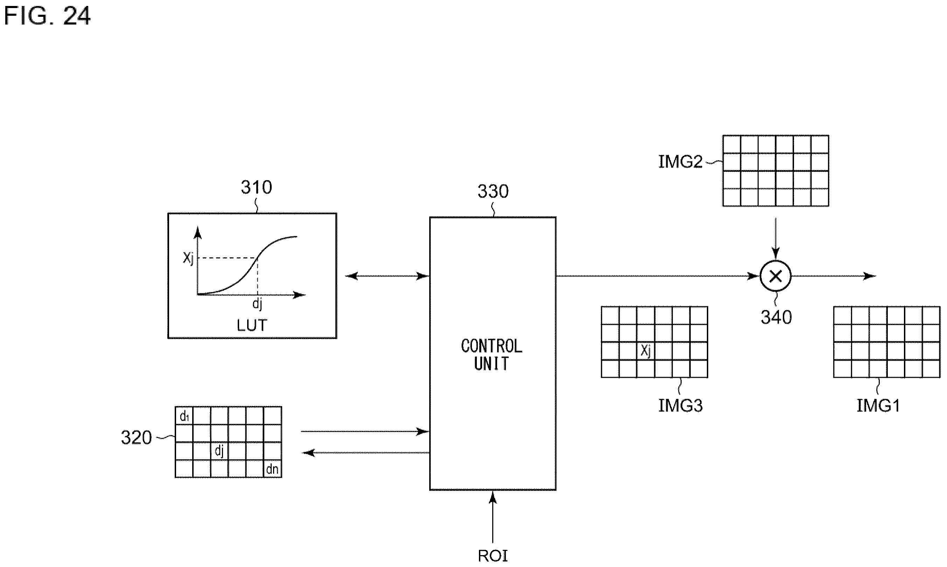

Fig. 24 is a functional block diagram of the controller 300. The controller 300 may be implemented by a microcontroller that contains a processor on which a program can run. The block diagram in Fig. 24 therefore illustrates functions implemented by the program, in other words, processes that the program causes the processor to execute, as well as data described in the program, rather than a hardware configuration of the controller 300.

The controller 300 has the lookup table 310, the counter 320, the control unit 330, and the multiplier 340. The lookup table 310 presents the control characteristics having been illustrated in the upper tier of Fig. 19, that is, relationship between the control cycle and the normalized pixel value.

The counter 320 is allowed for independent count control for every first pixel PIX1. Given the number of pixels of the control image IMG1 is n, the counter 320 can maintain n count values $d_1$ to $d_n$. The counter 320 increments the n count values $d_1$ to $d_n$ every control cycle. Upon shifting of the j-th first pixel PIX1 from outside to inside of the ROI, the control unit 330 resets the j-th count value $d_j$ to 0. The count value $d_j$ is incremented by 1 from 0.

The control unit 330 generates the scaled image IMG3 with reference to the lookup table 310 and the counter 320. When creating the pixel value of the j-th pixel of the scaled image IMG3, the controller acquires the corresponding j-th count value $d_j$ of the counter 320. The controller then refers to the lookup table 310, and reads a

normalized pixel value $x_j$ that corresponds to the count value $d_j$. The thus read normalized pixel value $x_j$ will give the pixel value of the j-th pixel of the scaled image IMG3.

The multiplier 340 generates the control image IMG1, by multiplying the pixel values in the reference image IMG2, and the corresponding pixel values in the scaled image IMG3.

An exemplary implementation of the controller 300 has been described.

It is to be understood by those skilled in the art that the aforementioned Embodiment 2 is merely illustrative, and that combinations of the individual constituents or processes may be modified in various ways. Such modified examples will be explained below.

In Embodiment 2, the waveform according to which the pixel value is decreased has been selectable from two types, that were the first waveform and the second waveform. The present disclosure is, however, not limited thereto, wherein the waveform is also selectable from three or more types. Similarly, the waveform according to which the pixel value is increased has been selectable from two types, that were the third waveform and the fourth waveform. The present disclosure is, however, not limited thereto, wherein the waveform is also selectable from three or more types.

Having described in Embodiment 2 with reference to two modes illustrated in Fig. 13, the present disclosure is however not limited thereto. For example, a mode based on combination of the first waveform W1 and the fourth waveform W4, or a mode based on combination of the second waveform W2 and the third waveform W3 may be made available.

Although having described in Embodiment 2 that the variable light distribution lamp 210 was an LED array, the present disclosure is not limited thereto. For example, the variable light distribution lamp 210 may alternatively be constituted by a combination of a light source, and a spatial light modulator structured to pattern the light emitted from the light source. The spatial light modulator usable herein may be a digital micromirror device (DMD) or a liquid crystal device.

Although an exemplary case of implementing the controller 300 with a microcontroller has been described in Embodiment 2, the controller may alternatively be implemented by a field programmable gate array (FPGA), or an application specific integrated circuit (ASIC).

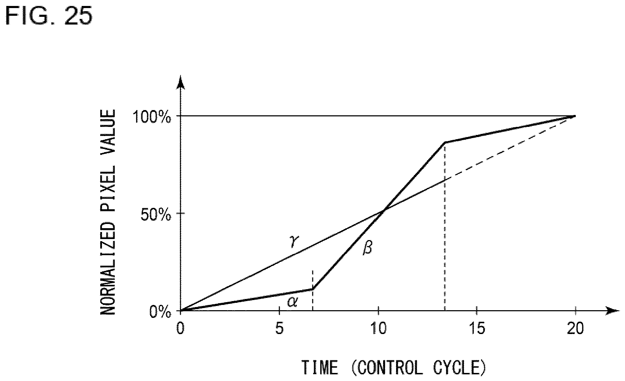

Fig. 25 is a diagram illustrating a characteristic of the gradual change control according to a modified example. The normalized pixel value may alternatively change at a constant slope, as illustrated in Fig. 25. The normalized pixel value in this case may alternatively be calculated every control cycle by simple addition, without referring to the lookup table.

(Embodiment 3)

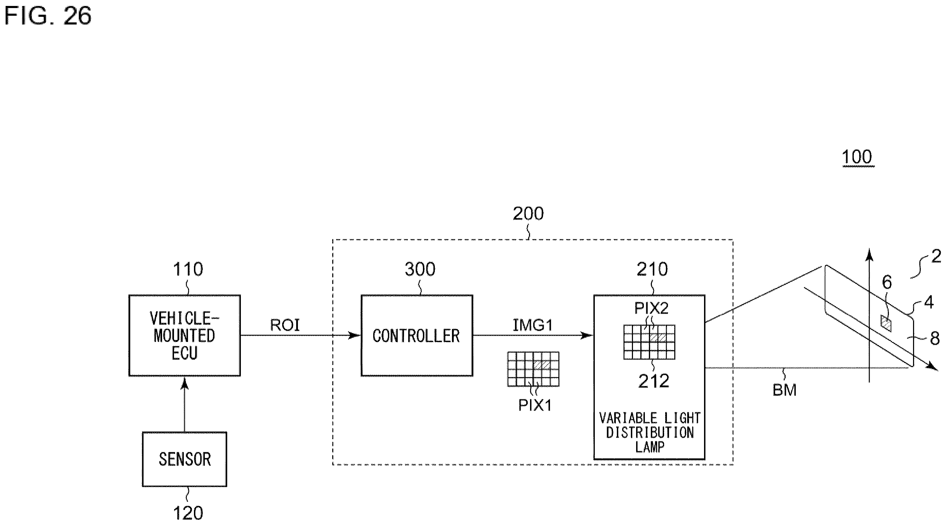

Fig. 26 is a block diagram illustrating the lamp system 100 of Embodiment 3. The lamp system 100 is mounted on an automobile, and functions as a headlamp structured to illuminate a field of view ahead of the vehicle. The lamp system 100 has the ADB function designed to shade an area where the oncoming car and the preceding car (collectively referred to as front vehicle, hereinafter) reside, according to a situation ahead of the vehicle in the high beam mode.

Fig. 26 schematically illustrates the virtual perpendicular screen 2, on which the high beam light distribution 4 is schematically illustrated. The high beam light distribution 4 contains the shading zone 6 whose illuminance is substantially zero, in a range where the front vehicle resides. Since the position of the front vehicle changes from moment to moment, the lamp system 100 controls the position of the shading zone 6 so as to follow the front vehicle. A zone other than the shading zone 6 will be referred to as the illumination zone 8. That is, the high beam light distribution 4 contains the shading zone 6 and the illumination zone 8.

The lamp system 100 has the vehicle lamp apparatus 200, the vehicle ECU 110, and the sensor 120. The sensor 120 is typically a camera or LiDAR, structured to sense a situation ahead of the vehicle. The vehicle electronic control unit (ECU) 110 is structured to detect the front car with reference to an output from the sensor 120, and to generate vehicle ROI information (referred to as ROI information, hereinafter) that represents a region of interest where the front car resides, in other words, a region to be shaded.

The ROI information contains location information regarding left end, right end, upper end, and lower end of the shading zone. The location information is usually represented by angle.

The ROI information is transmitted from the vehicle ECU 110, through a vehicle bus such as controller area network (CAN) or local interconnect network (LIN), to the vehicle lamp apparatus 200. The vehicle lamp apparatus 200 is responsible for the ADB control with use of the ROI information, during the high beam illumination.

The vehicle lamp apparatus 200 has the variable light distribution lamp 210, and the controller 300. The variable light distribution lamp 210 has a light-emitting device 212. The light-emitting device 212 is typically an LED array, and contains a plurality of light-emitting pixels (second pixels) PIX2. The luminance values of the light-emitting pixels PIX2 are set according to the pixel values of the plurality of pixels (first pixels) PIX1 contained in the control image IMG1 generated by the controller 300. The variable light distribution lamp 210 illuminates the region where a high beam light distribution 4 is to be formed on the virtual perpendicular screen 2 ahead of the vehicle, with a beam BM having an intensity distribution that corresponds to a luminance distribution of the light-emitting pixels PIX2. The pixel values of first pixels PIX1 and the luminance values of light-emitting pixels PIX2 are substantially equivalent, and may be

The controller 300 generates the control image IMG1 that defines the high beam light distribution with reference to the ROI information, and controls the luminance of the light-emitting pixels PIX2 of the variable light distribution lamp 210. Among the plurality of pixels PIX1 that constitute the control image IMG1, those in an area that correspond to the ROI, that is, those in an area that correspond to the shading zone 6 have a pixel value of zero. As a result, the plurality of light-emitting pixels PIX2 that correspond to the shading zone 6 will be turned off.

The controller 300 updates the luminance of the control image IMG1, in other words, the luminance of the plurality of light-emitting pixels PIX2, every control cycle T. The control cycle T may typically span several tens of milliseconds to 100 ms.

During travel, the relative positional relationship between the host car and the front vehicle ceaselessly changes, so that the vehicle ROI shifts as the relative positional relationship changes.

Upon shifting of the vehicle ROI in a certain direction, an area that was in the illumination zone 8 will fall in the shading zone 6, in the direction of shifting. The controller 300 then reduces the luminance of the light-emitting pixels PIX2 that newly correspond to the shading zone 6. On the contrary on the side opposite to the direction of shifting, an area having been fallen in the shading zone 6 will quit the shading zone 6 and will fall in the illumination zone 8, so that the controller 300 increases the luminance of the light-emitting pixels PIX2 that newly correspond to the illumination zone 8.

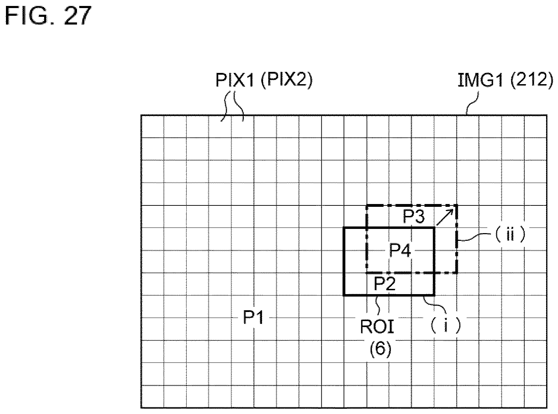

Fig. 27 is a diagram illustrating basic control of high beam light distribution accompanying shift of the vehicle ROI. Fig. 27 illustrates the control image IMG1. The control image IMG1 is equivalent to the luminance distribution of the pixel array of the light-emitting device 212, so that the pixels PIX1 can be interpreted as the light-emitting pixels PIX2.

In the diagram, a solid line rectangle (i) indicates a location of the ROI before shifting, and a dash-dotted line rectangle (ii) indicates a location of the ROI after shifting. The plurality of pixels PIX1 can be divided into four areas P1 to P4.

- First area P1: outside ROI, both before and after ROI shifting;
- Second area P2: inside ROI before ROI shifting, and outside ROI after ROI shifting. That is, the second area P2 is a range that newly falls in the illumination zone 8. The pixels contained in the second area P2 are referred to as gradually changing pixels.
- Third area P3: outside ROI before ROI shifting, and inside ROI after ROI shifting. That is, the third area P3 is a range that newly falls in the shading zone 6.
- Fourth area P4: inside ROI, both before and after ROI shifting.

The controller 300 maintains the pixel values of the pixels PIX1 contained in the first area P1 and the fourth area P4, so as to maintain the luminance of the light-emitting elements PIX2 corresponding thereto.

The controller 300 immediately zeros the pixel values of the pixels PIX1 contained in the third area P3, and immediately zeros the luminance of the light-emitting pixels PIX2 corresponding thereto. "Immediately" herein means a moment that is short enough to prevent glare, and may for example be approximately one to three control cycles. This can immediately zero the luminance of an area that corresponds to the third area P3 in the high beam light distribution, and can suppress glare possibly cast on the front vehicle.

For the pixels PIX1 contained in the second area P2, the controller 300 gradually changes the pixel values with time, from 0 towards the target value X according to a predetermined waveform (referred to as gradual change control, or time-blurred control), and increases the luminance of the corresponding light-emitting pixels PIX2 with time. In other words, upon shifting of the shading zone 6 in a certain direction, the controller 300 slowly increases the luminance of the light-emitting pixels PIX2 in the illumination zone 8, which was newly generated on the side opposite to the direction of shifting, from 0 towards the target value.

If the vibration of the vehicle body is not taken into account, the aforementioned gradual change control can balance the glare prevention and good field of view. The vehicle body during travel, however, ceaselessly vibrates up and down, and left and right. The vehicle ROI therefore shifts up and down, and left and right, even in a situation where the relative position between the front vehicle and the host car is kept unchanged. A problem in the gradual change control will now be explained, while exemplifying the vibration (pitching) in the vertical direction.

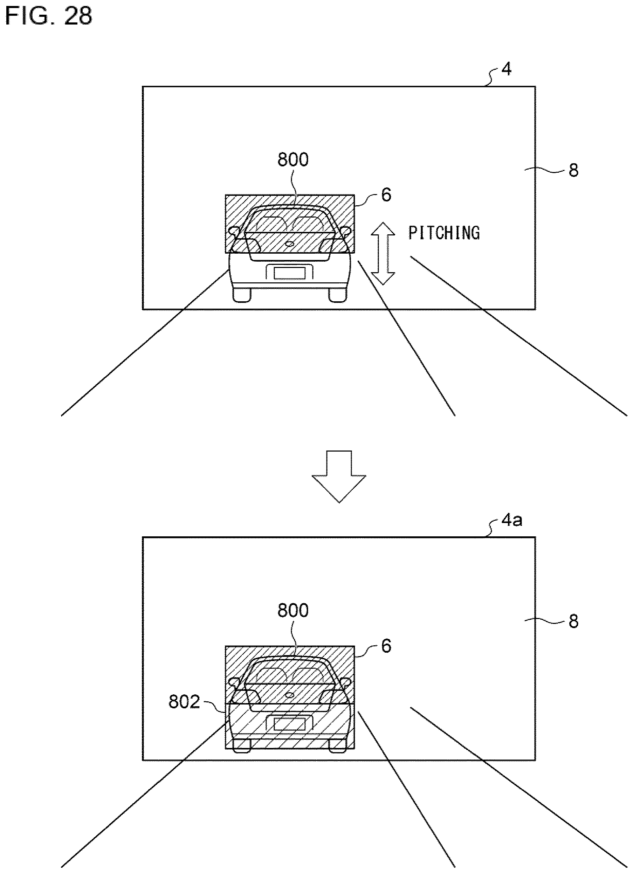

Fig. 28 is a diagram explaining a problem associated with the gradual change control. The upper tier of Fig. 28 illustrates the high beam light distribution 4 during travel without pitching. The high beam light distribution 4 contains the shading zone 6, so as not to cast glare to the front vehicle 800.

The lower tier of Fig. 28 illustrates a high beam light distribution 4a during travel under pitching. Assuming now the vehicle ROI shifts downwards, and then returns to the previous position. Accordingly, a lower part 802 (rear bumper or the road face therebelow) of the front vehicle 800 once enters the shading zone 6, and will have the luminance of the part zeroed. The luminance of the part is then slowly increased by the gradual change control. Therefore, the area which should actually be illuminated will have the luminance lowered for a while, thus degrading the visibility.

To solve this problem, this embodiment employs different waveforms used for the gradual change control of the pixel values of the gradually changing pixels, depending on the position of the gradually changing pixels to be subjected to the gradual change control.

The different waveforms mean that they have different lengths of time (time constants) over which the luminance will reach a certain level of brightness.

More specifically, different control waveforms will be employed depending on a case where the gradually changing pixels are located in the lower end area, or in an upper end area of the vehicle ROI.

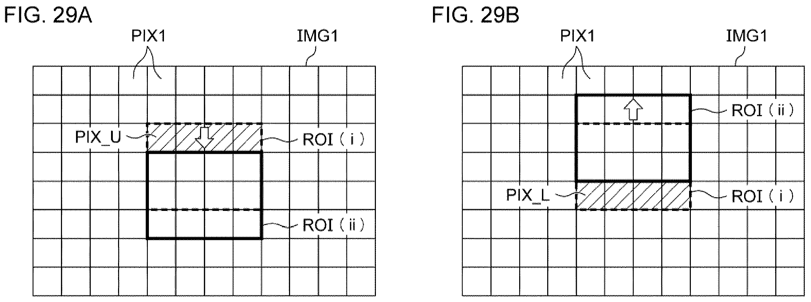

Figs. 29(a) and (b) are diagrams explaining positional relationships between the vehicle ROI and gradually changing pixels. Fig. 29(a) illustrates a scene where the vehicle ROI shifts downwards from position (i) towards position (ii). The gradually changing pixels PIX_U now appear above the vehicle ROI.

Fig. 29(b) illustrates a scene where the vehicle ROI shifts upwards from position (i) towards position (iii). The gradually changing pixels PIX_L now appear below the vehicle ROI.

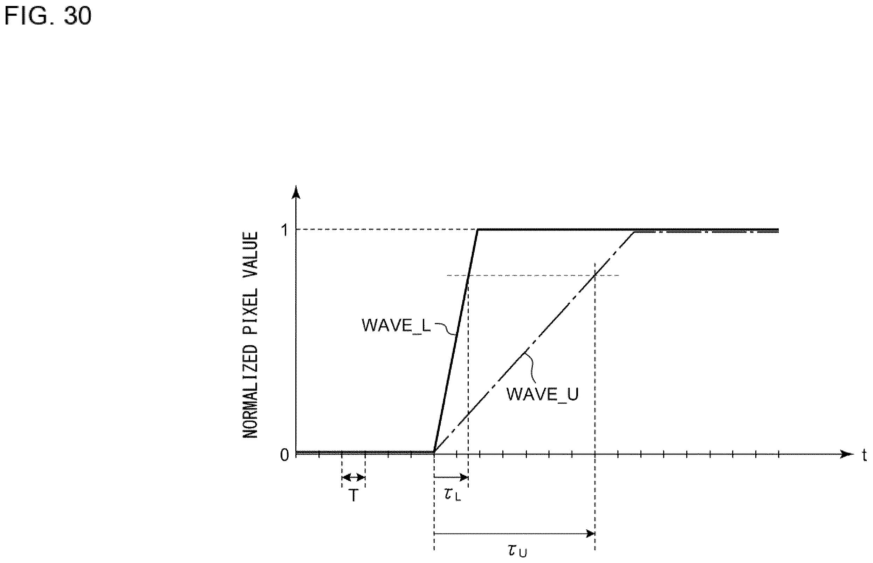

Fig. 30 is a diagram illustrating exemplary control waveforms. WAVE_U is an exemplary control waveform applicable to the gradually changing pixels PIX_U above the vehicle ROI. WAVE_L is an exemplary control waveform applicable to the gradually changing pixels PIX_L below the vehicle ROI. Considering now the rise transition of a certain pixel value, such value normalized by a value after transition (target value) will be defined as the normalized pixel value. The control waveform may be specified while referring to the normalized pixel value, and will change between 0 and 1, every control period T.

A time constant $\tau_L$ of the control waveform WAVE_L is shorter than a time constant $\tau_U$ of the control waveform WAVE_U. The time constant $\tau$ represents a length of time necessary for the normalized pixel value to reach a predetermined value.

The structure of the vehicle lamp apparatus 200 has been described. Next, operations thereof will be explained.

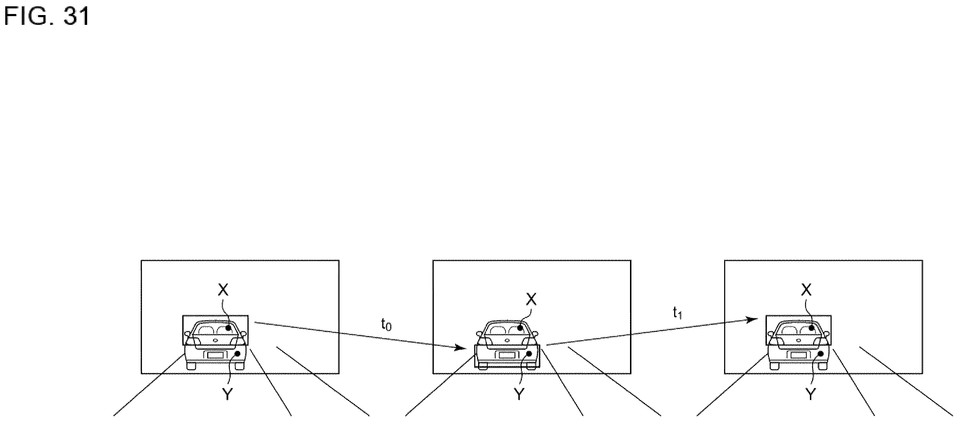

Fig. 31 is a diagram illustrating travel scenes with occurrence of downward pitching. In the initial state, the vehicle ROI is located in an area that corresponds to the rear window of the front vehicle. Assuming now the vehicle ROI shifts downwards at time $t_0$ due to pitching of the host vehicle, and recovers the previous position at time $t_1$. In this travel scene, a change in the luminance (pixel value) between two locations X and Y will be focused. The location X falls on the rear window, meanwhile the location Y falls on the rear bumper.

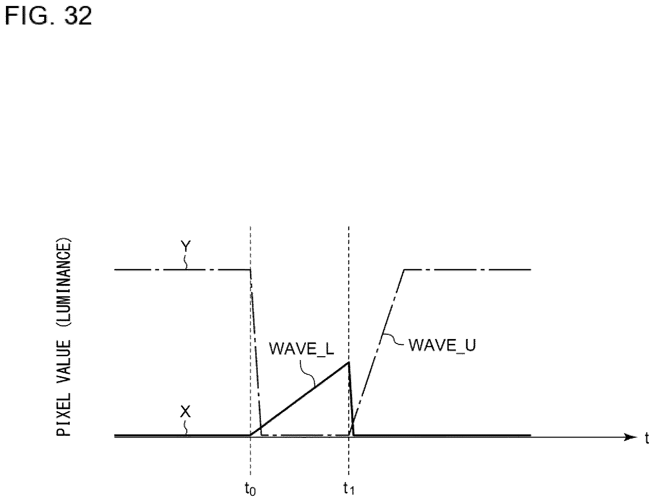

Fig. 32 is a diagram illustrating the pixel values at the locations X and Y in the travel scenes illustrated in Fig. 31. First, changes in the pixel values at the location X will be described. In the initial state, the location X falls in the shading zone, and therefore has a pixel value of 0.

Upon downward shifting of the vehicle ROI at time $t_0$, the gradually changing pixels appear at the location X above the vehicle ROI. The pixel values of the gradually changing pixels therefore slowly rise according to the control waveform WAVE_U.

Upon upward shifting of the vehicle ROI at time $t_1$, the location X will fall in the vehicle ROI. The pixel values herein will immediately be zeroed.

Next, changes in the pixel values at the location Y will be described. In the initial state, the location Y falls in the illumination zone, and therefore has a non-zero initial value.

Upon downward shifting of the vehicle ROI at time $t_0$, the location Y will fall in the vehicle ROI, whereby the pixel values thereof will immediately be zeroed.

Upon upward shifting of the vehicle ROI at time $t_1$, the location Y will return back to the illumination zone. The location Y herein will have the gradually changing pixels appear below the vehicle ROI. The pixel values of the gradually changing pixels therefore rapidly rise, according to the control waveform WAVE_L.

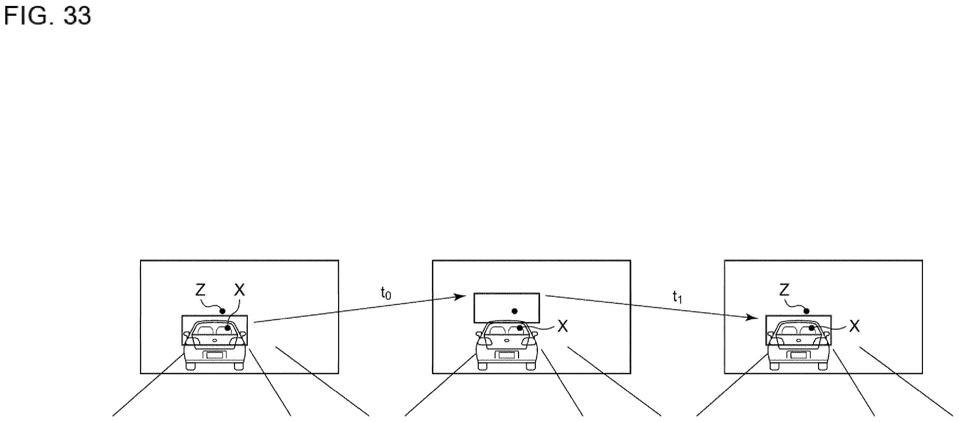

Fig. 33 is a diagram illustrating travel scenes with occurrence of upward pitching. In the initial state, the vehicle ROI is located in an area that corresponds to the rear window of the front vehicle. Assuming now the vehicle ROI shifts upwards at time $t_0$ due to pitching of the host vehicle, and recovers the previous position at time $t_1$. In this travel scene, changes in the luminance (pixel value) between two locations X and Z will be focused on. The location X lies on the rear window, meanwhile the location Z is located above the front car.

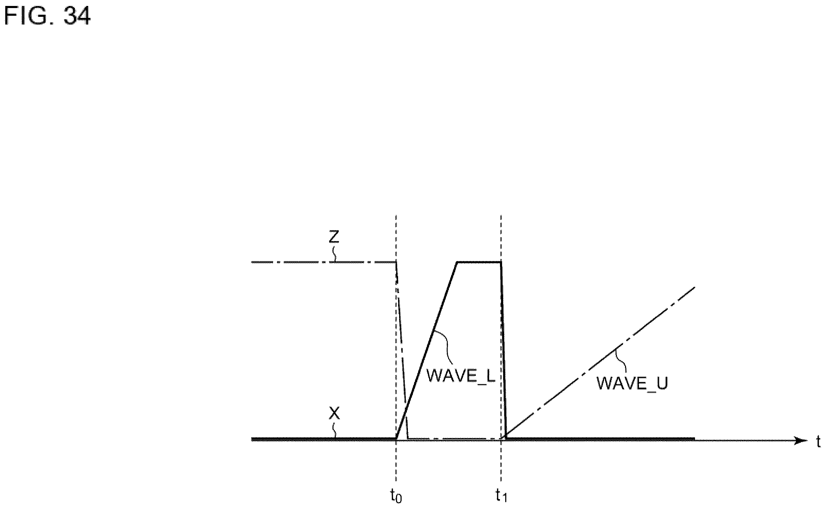

Fig. 34 is a diagram illustrating the pixel values at the locations X and Z in the travel scenes illustrated in Fig. 33. First, changes in the pixel values at the location X will be described. In the initial state, the location X falls in the shading zone, and therefore has a pixel value of 0.

Upon upward shifting of the vehicle ROI at time $t_0$, the location X will contain gradually changing pixels below the vehicle ROI. The pixel values thereof will therefore elevate quickly, according to the control waveform WAVE_L.

Upon downward shifting of the vehicle ROI at time $t_1$, the location X will fall in the vehicle ROI. The pixel values herein will immediately be zeroed.

Next, changes in the pixel value at the location Z will be described. In the initial state, the location Z falls in the illumination zone, and therefore has a non-zero initial pixel value.

Upon upward shifting of the vehicle ROI at time $t_0$, the location Z will fall in the vehicle ROI, whereby the pixel values thereof will immediately be zeroed.

Upon downward shifting of the vehicle ROI at time $t_1$, the location Z will return back to the illumination zone. The location Z herein will have the gradually changing pixels appear above the vehicle ROI. The pixel values thereof will therefore elevate slowly, according to the control waveform WAVE_U.

For the gradually changing pixels located on the right side or the left side of the vehicle ROI, the control waveform WAVE_U same as that used for the upper side is applicable.

Operations of the vehicle lamp apparatus 200 have been described. Next, the advantage will be described.

In a case where the gradual change control is necessary, change of the luminance according to a steep waveform, regardless of the direction of shift of the shading zone, will be more likely to give glare. On the contrary, change of the luminance according to a gentle waveform, regardless of the direction of shift of the shading zone, will darken the area which should actually be illuminated.

In this embodiment, since the luminance is changed according to different control waveforms depending on the relative positional relationship between the light-emitting pixel (first pixel) and the shading zone (vehicle ROI), so that the brightness of an area which should be illuminated may be restored within a short time, while suppressing glare.

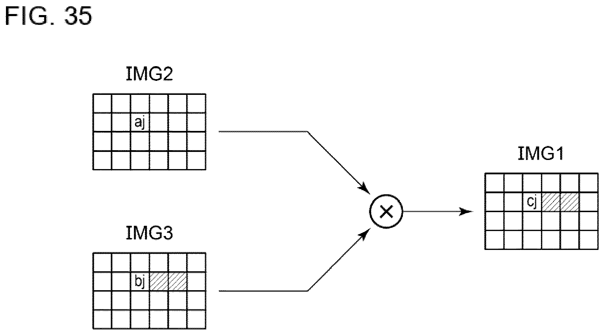

Fig. 35 is a diagram explaining creation of the control image by the controller 300. The controller 300 generates the control image IMG1, by multiplying corresponding pixel values in the reference image IMG2 and in the scaled image IMG3. Assuming now a pixel value of a certain pixel of the reference image IMG2 as $a_j$, a pixel value of a corresponding pixel of the scaled image IMG3 as $b_j$, and a pixel value of a corresponding pixel of the control image IMG1 as $c_j$, then

$$c_j = a_j \times b_j$$

holds.

The reference image IMG2 specifies an illuminance distribution of the basic light distribution in the absence of the shading zone. In other words, the reference image IMG2 defines the pixel values of the plurality of first pixels PIX1 in the absence of the shading zone.

The scaled image IMG3 contains a plurality of third pixels having pixel values of 0 to 1. The pixel values of the third pixels in the scaled image IMG3 represent the normalized luminance values in the gradual change control.

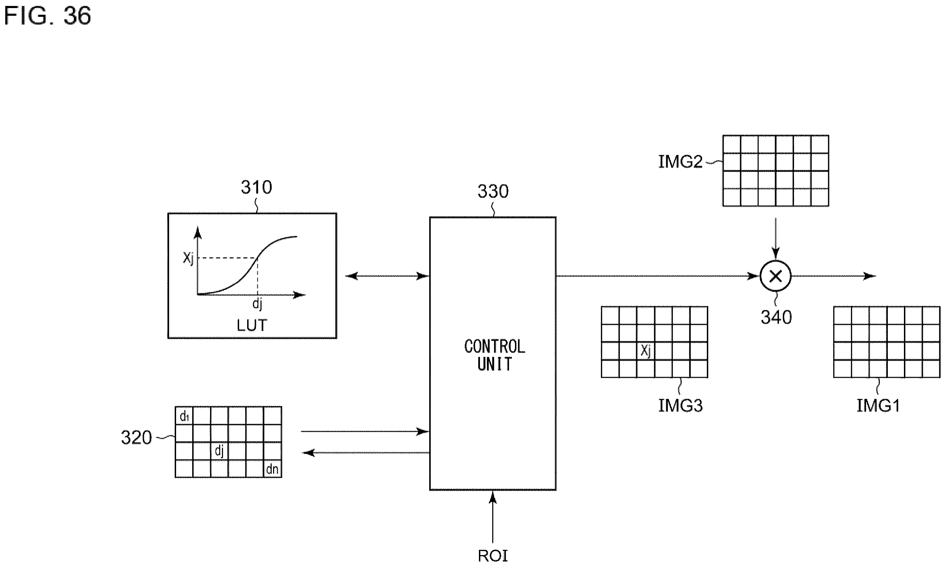

Fig. 36 is a functional block diagram of the controller 300. The controller 300 may be implemented by a microcontroller that contains a processor on which a program can run. The block diagram in Fig. 36 therefore illustrates functions implemented by the program, in other words, processes that the program causes the processor to execute, as well as data described in the program, rather than a hardware configuration of the controller 300.

The controller 300 has the lookup table 310, the counter 320, a control unit 330, and the multiplier 340. The lookup table 310 holds a relationship between the control cycles according to the control waveforms WAVE_L and WAVE_U, and the normalized luminance value.

The counter 320 is allowed for independent count control for every pixel PIX1. Given the number of pixels of the control image IMG1 is n, the counter 320 can maintain n count values $d_1$ to $d_n$. The counter 320 increments the n count values $d_1$ to $d_n$ every control cycle. Upon shifting of the j-th pixel PIX1 from outside to inside of the ROI, the control unit 330 resets the j-th count value

$d_j$ to 0. The count value $d_j$ is incremented by 1 from 0.

The control unit 330 generates the scaled image IMG3 with reference to the lookup table 310 and the counter 320. The lookup table 310 holds relationships between each of the control cycles according to the control waveforms WAVE_L and WAVE_U, and the normalized luminance value.

When creating the pixel value of the j-th pixel of the scaled image IMG3, the controller acquires the corresponding j-th count value $d_j$ of the counter 320. The controller then refers to the lookup table 310, to select the control waveform WAVE_L or WAVE_U, depending on the locations of the pixels. The controller then reads out the normalized luminance value $x_j$ that corresponds to the count value $d_j$. The thus read normalized luminance value $x_j$ will give the pixel value of the j-th pixel of the scaled image IMG3.

The multiplier 340 generates the control image IMG1, by multiplying the pixel values in the reference image IMG2, and the corresponding pixel values in the scaled image IMG3.

Note that, in a case where the gradually changing pixels PIX_L below the vehicle ROI are returned back to have the previous luminance within a single control cycle, that is, in a case where the control waveform WAVE_L has a stepped waveform, the control waveform WAVE_L is not necessarily stored in the lookup table 310. In this case, it suffices that the gradual change control is invalidated, and the normalized luminance value x is set to 1 in the first control cycle.

An exemplary implementation of the controller 300 has been described.

It is to be understood by those skilled in the art that the aforementioned embodiments are merely illustrative, and that combinations of the individual constituents or processes may be modified in various ways. Such modified examples will be explained below.

Although having described in Embodiment 3 that the variable light distribution lamp 210 was an LED array, the present disclosure is not limited thereto. For example, the variable light distribution lamp 210 may alternatively be constituted by a combination of a light source, and a spatial light modulator structured to pattern the light emitted from the light source. The spatial light modulator usable herein may be a digital micromirror device (DMD) or a liquid crystal device.

Having described in Embodiment 3 that the controller 300 was implemented by a microcontroller, the controller 300 may alternatively be implemented by a field programmable gate array (FPGA), or an application specific integrated circuit (ASIC).

The control waveform used for the gradual change control is not limited to a single straight line as illustrated in Fig. 30. For example, the control waveform may be given by a combination of a plurality of straight lines having different slopes, or may draw a gentle curve.

Furthermore, the relationship between the position of the gradually changing pixel and the control waveform is not limited to that described in Embodiment 3.

(Embodiment 4)

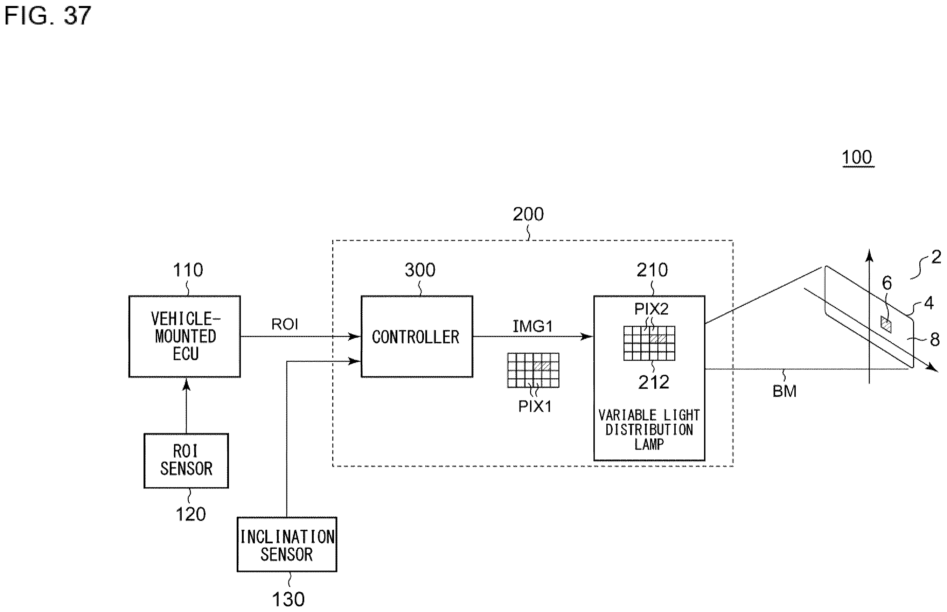

Fig. 37 is a block diagram illustrating the lamp system 100 of Embodiment 4. The lamp system 100 is mounted on an automobile, and functions as a headlamp structured to illuminate a field of view ahead of the vehicle. The lamp system 100 has the ADB function designed to shade an area where the oncoming car and the preceding car (collectively referred to as front vehicle, hereinafter) reside, according to a situation ahead of the vehicle in the high beam mode.

Fig. 37 schematically illustrates the virtual perpendicular screen 2, on which the high beam light distribution 4 is schematically illustrated. The high beam light distribution 4 contains the shading zone 6 whose illuminance is substantially zero, in a range where the front vehicle resides. Since the position of the front vehicle changes from moment to moment, the lamp system 100 controls the position of the shading zone 6 so as to follow the front vehicle. A zone other than the shading zone 6 will be referred to as the illumination zone 8. That is, the high beam light distribution 4 contains the shading zone 6 and the illumination zone 8.

The lamp system 100 has the vehicle lamp apparatus 200, the vehicle ECU 110, the ROI sensor 120, and an inclination sensor 130. The ROI sensor 120 is typically a camera or LiDAR, structured to sense a situation ahead of the vehicle. The vehicle electronic control unit (ECU) 110 is structured to detect the front car with reference to an output from the ROI sensor 120, and to generate vehicle ROI information (referred to as ROI information, hereinafter) that represents a range where the front car resides, in other words, a region to be shaded.

The ROI information contains location information regarding left end, right end, upper end, and lower end of the shading zone. The location information is usually represented by angle.

The ROI information is transmitted from the vehicle ECU 110, through a vehicle bus such as controller area network (CAN) or local interconnect network (LIN), to the vehicle lamp apparatus 200. The vehicle lamp apparatus 200 is responsible for the ADB control with use of the ROI information, during the high beam illumination.

The vehicle lamp apparatus 200 has the variable light distribution lamp 210, and the controller 300. The variable light distribution lamp 210 has the light-emitting device 212. The light-emitting device 212 is typically an LED array, and contains a plurality of light-emitting pixels (second pixels) PIX2. The luminance values of the light-emitting pixels PIX2 are set according to the pixel values of the plurality of pixels (first pixels) PIX1 contained in the control image IMG1 generated by the controller 300. The variable light distribution lamp 210 illuminates the region where a high beam light distribution 4 is to be formed on the virtual perpendicular screen 2 ahead of the vehicle, with the beam BM having an intensity distribution that corresponds to a luminance distribution of the light-emitting pixels PIX2.

The controller 300 generates the control image IMG1 that defines the high beam light distribution with reference to the ROI information, and controls the luminance of the light-emitting pixels PIX2 of the variable light distribution lamp 210. Among the plurality of pixels PIX1 that constitute the control image IMG1, those in an area that correspond to the ROI, that is, those in an area that correspond to the shading zone 6 have a pixel value of zero. As a result, the plurality of light-emitting pixels PIX2 that correspond to the shading zone 6 will be turned off. The light-emitting pixel to be turned off will be referred to as OFF pixel. The controller 300 selects the light-emitting pixels that correspond to the vehicle ROI, as a plurality of OFF pixels, from among the light-emitting pixels PIX2, so that the shading zone 6 will be formed corresponding to the vehicle ROI.

The controller 300 updates the luminance of the control image IMG1, in other words, the luminance of the plurality of light-emitting pixels PIX2, every control cycle T. The control cycle T may typically span several tens of milliseconds to 100 ms.

During travel, the relative positional relationship between the host car and the front vehicle ceaselessly changes, so that the vehicle ROI shifts as the relative positional relationship changes. The ADB control is implemented by changing the position of the OFF pixels so as to follow the change in the vehicle ROI.

Note now the performances of the currently available ROI sensor 120 is not sufficient to capture the shift of the vehicle ROI ascribed to pitching vibration of the vehicle body. The light distribution pattern (that is, the luminance distribution of the light-emitting pixels PIX2) for high beam illumination will therefore remain unchanged, even under occurrence of pitching vibration of the vehicle body. A prior ADB lamp has caused fluctuation due to pitching vibration, only in the direction of high beam illumination, thus casting glare to the front vehicle.

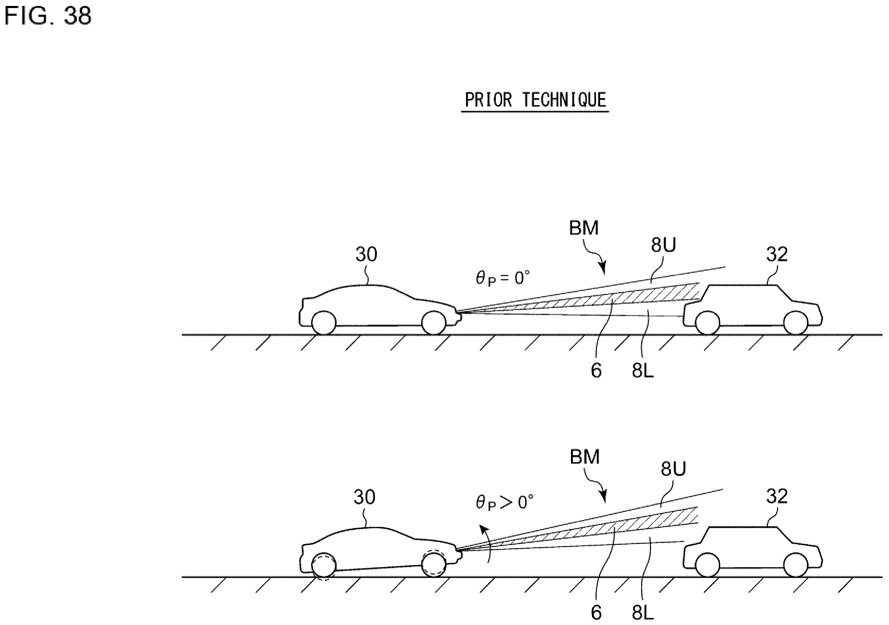

Fig. 38 is a diagram explaining generation of glare, under pitching vibration of a vehicle body in the prior art. Fig. 38 illustrates a vehicle (host vehicle) 30 having the lamp system 100 mounted thereon, and a preceding car 32. Angle of inclination (angle of inclination in the front-back direction) about the axis of pitching of the host car 30 is referred to as pitch angle $\theta p$. The pitch angle $\theta p$ herein is defined while aligning the direction of zero degrees in parallel to the road face, with the upward direction defined as positive, and with the downward direction defined as negative. High beam BM covers an upper illumination zone 8U, the shading zone 6, and a lower illumination zone 8L. Before pitching occurs, the shading zone 6 is appropriately located on the rear window of the preceding car 32.

Upon occurrence of pitching vibration, the scene illustrated in the upper tier of Fig. 38, with a pitch angle $\theta p$ of 0°, will transition to a scene with the pitch angle $\theta p$ larger than 0°. The cycle of the pitching vibration is shorter than the detection cycle of the vehicle ROI, so that the vehicle ROI cannot follow the pitching vibration. Therefore, the optical axis will be directed upward, while leaving the high beam light distribution unchanged. Accordingly, the lower illumination zone 8L will be illuminated on the rear window of the preceding car 32, thus casting glare.

Dynamic electronic optical axis correction for solving the problem will now be described.

The lamp system 100 according to Embodiment 4 has the inclination sensor 130. The inclination sensor 130 generates information correlated with the angle of inclination of the vehicle body. The inclination sensor 130 usable herein may be a gyro sensor.

The controller 300 detects inclination of the vehicle body, with reference to output of the inclination sensor 130. With the inclination sensor 130 constituted by the gyro sensor, the controller 300 can acquire the pitch angle $\theta p$, by integrating angular velocity $\omega p$ about the axis of pitching detected by the gyro sensor.

Note it is also acceptable to use a combination of a plurality of vehicle height sensors provided on the front and the rear of the vehicle body, as the inclination sensor 130.

Although the controller 300 and the inclination sensor 130 are directly connected in Fig. 37, the present disclosure is not limited thereto. The inclination sensor 130 may be connected to the vehicle ECU 110, whereby the controller 300 may receive information on the inclination of the vehicle body from the vehicle ECU 110.

The controller 300 is structured to detect the angle of inclination $\theta p$ of the vehicle body, and to dynamically shift positions of the OFF pixels in a vertical direction, so that the location of the shading zone 6 will vary depending on the angle of inclination $\theta p$. Accordingly, even if the pitching vibration occurred on the vehicle body, fluctuation of the optical axis caused by the pitching vibration will be canceled by the electronic optical axis correction, thereby preventing glare possibly cast on the front vehicle.

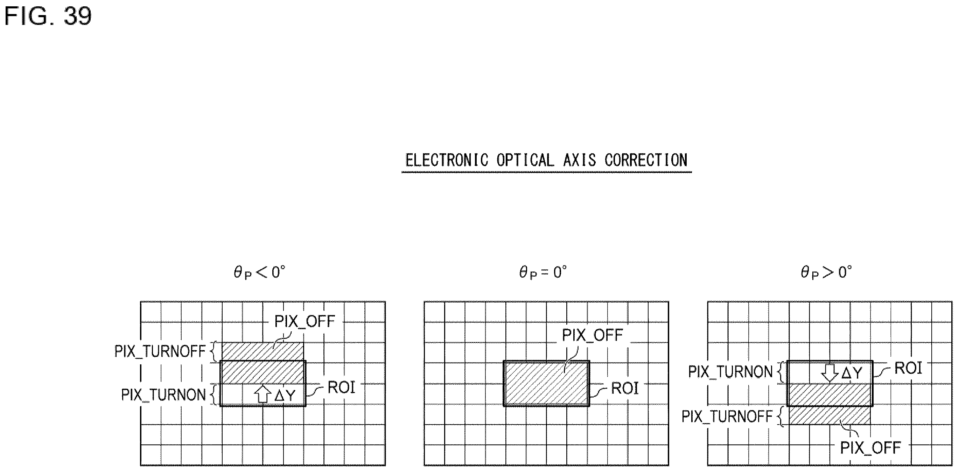

Fig. 39 is a diagram explaining control of the high beam light distribution by the electronic optical axis correction. Fig. 39 illustrates a luminance distribution of the light-emitting device 212, which is equivalent to the control image IMG1. The light-emitting pixels PIX2 and the pixels PIX1 in the control image IMG1 may be mutually interpreted.

The center diagram of Fig. 39 presents a scene with a pitch angle $\theta p$ of 0°, which corresponds to a scene on the upper tier of Fig. 38. In this scene, a part of the light-emitting pixels PIX1 that corresponds to the vehicle ROI will be turned off to be OFF pixels PIX_OFF.

The right diagram of Fig. 39 presents a scene with $\theta p > 0$°, which corresponds to a scene on the lower tier of Fig. 38. If the pitching cycle is short, location of the vehicle ROI remains unchanged. The controller 300 dynamically shifts the positions of the OFF pixels PIX_OFF, in the vertical direction (downwards, in this example). The direction of shifting corresponds to a numerical sign of the pitch angle $\theta p$, and the amount of shift $\Delta Y$ is determined on the basis of the absolute value of the pitch angle $\theta p$.

The left diagram of Fig. 39 presents a scene with $\theta p < 0$°. In a scene with $\theta p < 0$°, the OFF pixels PIX_OFF are shifted upwards.

Shifting of the OFF pixels PIX_OFF in the first direction is equivalent to directing the optical axis upwards, meanwhile shifting of the OFF pixels PIX_OFF in the second direction is equivalent to directing the optical axis downwards.

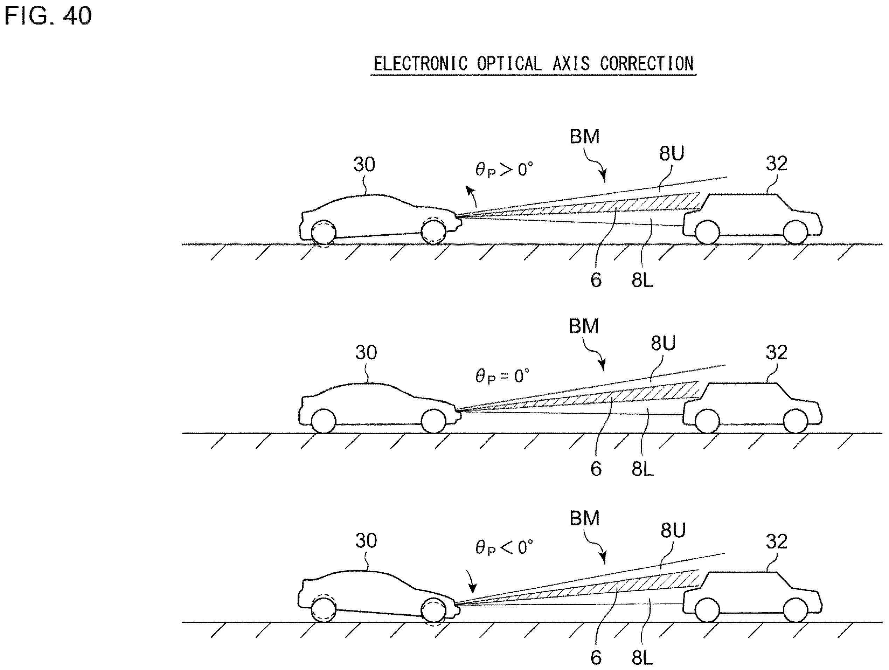

Fig. 40 is a diagram explaining suppression of glare by the dynamic electronic optical axis correction. The upper tier, the middle tier, and the lower tier of Fig. 40 present scenes with $\theta p > 0$°, $\theta p = 0$°, and $\theta p < 0$°, respectively. In the scene with $\theta p > 0$°, the OFF pixels PIX_OFF are shifted downwards, thereby shifting the shading zone 6 downwards. This successfully locates the shading zone 6 appropriately on the rear window of the preceding car 32, despite the host car 30 inclining upwards.

In the scene with $\theta p < 0$°, the OFF pixels PIX_OFF are shifted upwards, thereby shifting the shading zone 6 upwards. This successfully locates the shading zone 6 appropriately on the rear window of the preceding car 32, despite the host car 30 inclining downwards.

The dynamic electronic optical axis correction has been described.

Reference is again made to Fig. 39. The light-emitting pixels that transitioned from OFF to ON, as a result of the dynamic shifting of position of the OFF pixels PIX_OFF, will be referred to as turn-ON pixels PIX_TURNON. Conversely, the light-emitting pixels that transitioned from ON to OFF, as a result of the dynamic shifting of position of the OFF pixels PIX_OFF, will be referred to as turn-OFF pixels PIX_TURNON.

As illustrated on the left in Fig. 39, upon upward shifting of the OFF pixels PIX_OFF, the turn-ON pixels PIX_TURNON appear below the vehicle ROI, meanwhile the turn-OFF pixels PIX_TURNOFF appear above the vehicle ROI.

On the contrary as illustrated on the right in Fig. 39, upon downward shifting of the OFF pixels PIX_OFF, the turn-ON pixels PIX_TURNON appear above the vehicle ROI, meanwhile the turn-OFF pixels PIX_TURNOFF appear below the vehicle ROI.

The controller 300 immediately zeros the luminance of the turn-OFF pixels PIX_TURNOFF, regardless of their position. "Immediately" herein means a moment that is short enough to prevent glare, and may for example be approximately one to three control cycles. This successfully suppresses glare possibly cast on the front vehicle.

The controller 300 changes the luminance of the turn-ON pixels PIX_TURNON over different transition times, depending on whether the turn-ON pixels PIX_TURNON are located above or below the vehicle ROI. The transition time is a length of time over which the luminance reaches a predetermined level, and typically a length of time up to a level obtainable by multiplying a target luminance, by a predetermined coefficient $\alpha$ ($\alpha <$ 1). $\alpha$ May be 0.8 to 0.9 or around.

More specifically, the transition time of the luminance of the turn-ON pixels PIX_TURNON located in the lower end area of the vehicle ROI (lower turn-ON pixels), is shorter than the transition time of luminance of the turn-ON pixels PIX_TURNON located in the upper end area (upper turn-ON pixels) .

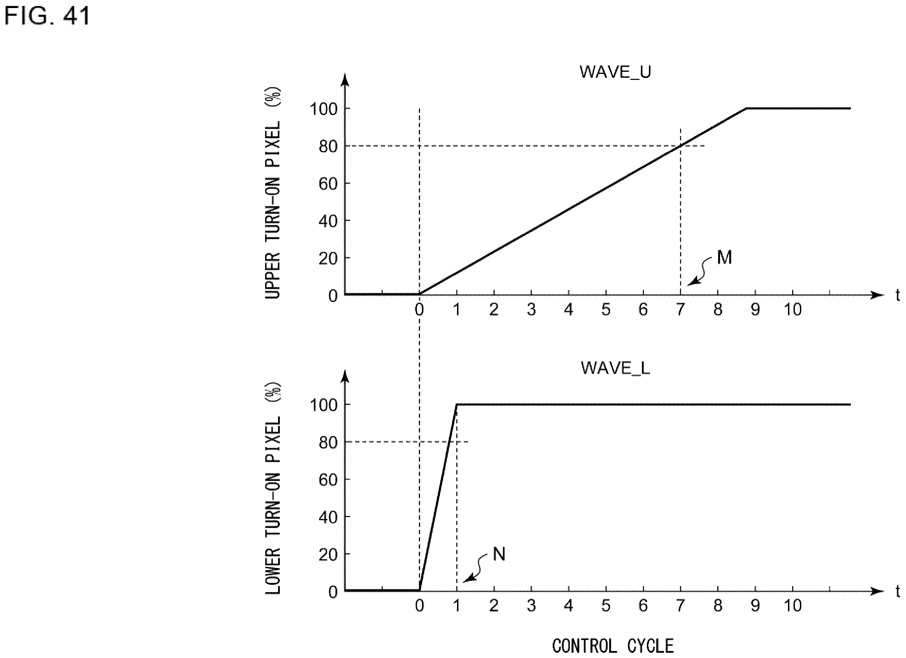

Fig. 41 is a diagram illustrating a control waveform WAVE_U that defines luminance of the upper turn-ON pixels, and a control waveform WAVE_L that defines luminance of the lower turn-ON pixels. The abscissa plots the time (control cycle). The ordinate plots the luminance of the turn-ON pixels, normalized assuming the maximum value as 100%. The transition time herein is defined by a length of time over which the normalized pixel value reaches 80%.

Assuming that the transition time of the luminance of the upper turn-ON pixels PIX_TURNON spans M control cycles, and the transition time of the luminance of the lower turn-ON pixels PIX_TURNON spans N control cycles, a relationship M > N holds. The example of Fig. 41 is given by M = 7 and N = 1.

Next, advantages of the lamp system 100 will be described. Advantages of the lamp system 100 will be clarified by comparison with a comparative technique. The comparative technique will be described in advance.

The comparative technique has elevated the luminance of the upper turn-ON pixels and the lower turn-ON pixels, over the same M control cycles. That is, the luminance of the lower turn-ON pixels has been changed, according to the control waveform for the upper turn pixels.

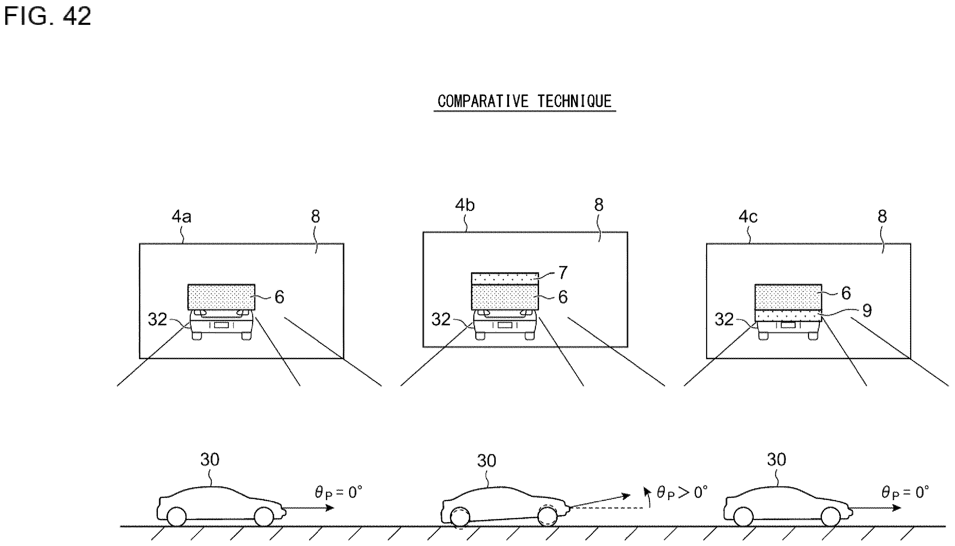

Fig. 42 is a diagram explaining changes in the high beam light distribution according to the comparative technique. Considered now are changes in the high beam light distribution 4 under upward pitching. In the initial state with pitch angle $\theta p = 0°$, the high beam light distribution 4a that contains the shading zone 6 at the position of the rear window of the preceding car 32 is generated.

Upon upward inclination ($\theta p > 0°$) of the vehicle body, an illumination range of a high beam light distribution 4b shifts upwards. The shading zone 6 herein is shifted downwards by the electronic optical axis correction of the controller 300, whereby the shading zone 6 stays located on the rear window of the preceding car 32. In addition, as a result of downward shifting of the shading zone 6 caused by the electronic optical axis correction, the upper turn-ON pixels appear in an area 7 above the shading zone 6. Since the pixel values (luminance) of the upper turn-ON pixels gradually increase with time, the area 7 is kept darkened for a while. The area 7 will, however, not cause a problem, since it is a space above the preceding car 32 free of object to be illuminated.

Next, upon recovery of the previous posture ($\theta p = 0°$) of the vehicle body, also the illumination range of a high beam light distribution 4c returns back to the previous state. The shading zone 6 herein is shifted upwards by the electronic optical axis correction of the controller 300, and stays located on the rear window of the preceding car 32. As a result of upward shifting of the shading zone 6 caused by the electronic optical axis correction, the lower turn-ON pixels appear in an area 9 below the shading zone 6. The pixel values (luminance) of the lower turn-ON pixels slowly increase at the same speed as that of the upper turn-ON pixels. A dark zone will therefore appear below the shading zone 6. The area below the shading zone 6 contains the rear bumper of the preceding car 32 (or the road face), so that darkening of such area will make it more difficult for the driver of the host car 30 to recognize the preceding car 32.

The above are the problems that occur in the comparative technique. Next, creation of the light distribution by the lamp system 100 according to Embodiment 4 will be described.

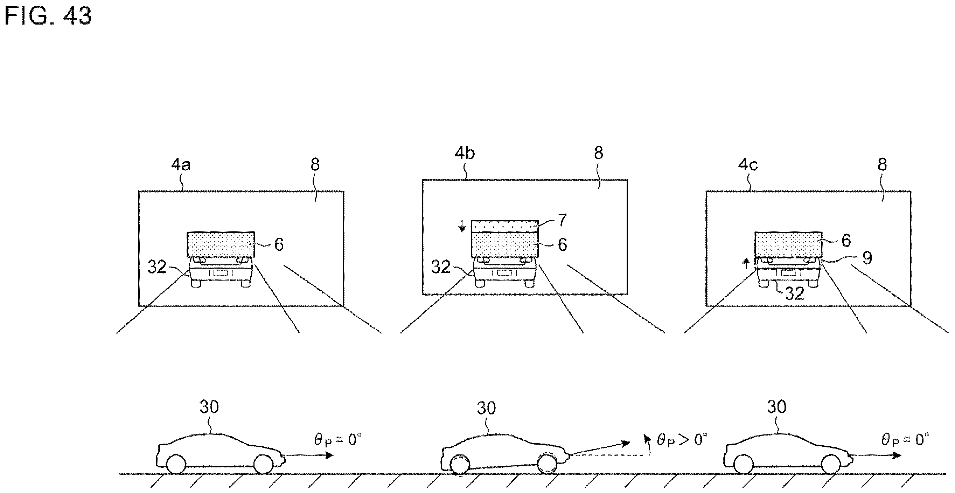

Fig. 43 is a diagram illustrating the high beam light distribution 4 generated by the lamp system 100 according to Embodiment 4, under upward pitching. In the initial state with pitch angle $\theta p = 0°$, the high beam light distribution 4a that contains the shading zone 6 at the position of the rear window of the preceding car 32 is generated.

Upon upward inclination ($\theta p > 0°$) of the vehicle body, an illumination range of the high beam light distribution 4b shifts upwards. The shading zone 6 herein is shifted downwards by the electronic optical axis correction of the controller 300, whereby the shading zone 6 stays located on the rear window of the preceding car 32. In addition, as a result of downward shifting of the shading zone 6 caused by the electronic optical axis correction, the upper turn-ON pixels appear in the area 7 above the shading zone 6. Since the pixel values (luminance) of the upper turn-ON pixels gradually increase with time, the area 7 is kept darkened for a while. The area 7 will, however, not cause a problem, since it is a space above the preceding car 32 free of object to be illuminated.

Next, upon recovery of the previous posture ($\theta p = 0°$) of the vehicle body, also the illumination range of the high beam light distribution 4c returns back to the previous state. The shading zone 6 herein is shifted upwards by the electronic optical axis correction of the controller 300, and stays located on the rear window of the preceding car 32. As a result of upward shifting of the shading zone 6 caused by the electronic optical axis correction, the lower turn-ON pixels appear in the area 9 below the shading zone 6. Since the pixel values (luminance) of the lower turn-ON pixels sharply increase within a short time, the area 9 immediately becomes bright. That is, the dark area will therefore be prevented from occurring below the shading zone 6.

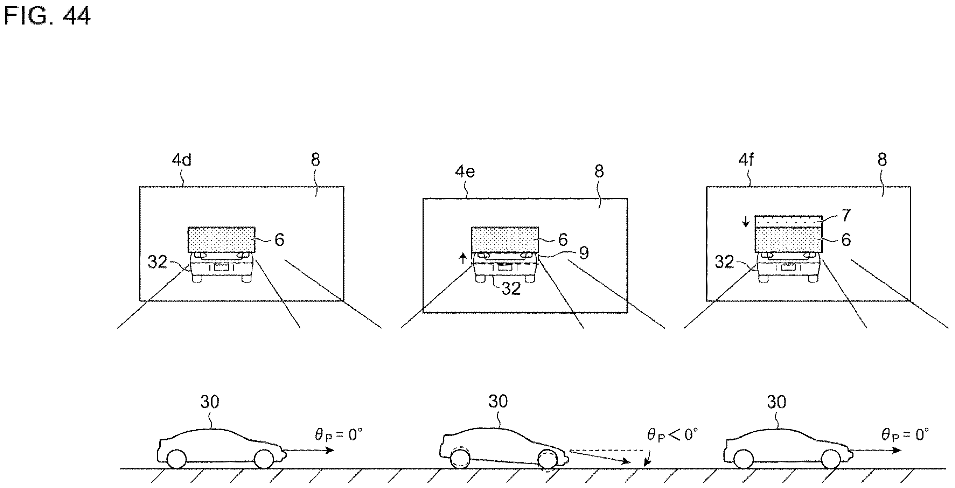

Fig. 44 is a diagram explaining the high beam light distribution 4 generated by the lamp system 100 according to Embodiment 4, under downward pitching. In the initial state with pitch angle θp = 0°, a high beam light distribution 4d that contains the shading zone 6 at the position of the rear window of the preceding car 32 is generated.

Upon downward inclination (θp < 0°) of the vehicle body, an illumination range of a high beam light distribution 4e shifts downwards. The shading zone 6 herein is shifted upwards by the electronic optical axis correction of the controller 300, whereby the shading zone 6 stays located on the rear window of the preceding car 32. In addition, as a result of upward shifting of the shading zone 6 caused by the electronic optical axis correction, the lower turn-ON pixels appear in the area 9 below the shading zone 6. Since the pixel values (luminance) of the lower turn-ON pixels sharply increase within a short time, the area 9 immediately becomes bright. That is, the dark area will therefore be prevented from occurring below the shading zone 6.

Next, upon recovery of the previous posture (θp = 0°) of the vehicle body, also the illumination range of a high beam light distribution 4f returns back to the previous state. The shading zone 6 herein is shifted upwards by the electronic optical axis correction of the controller 300, and stays located on the rear window of the preceding car 32. As a result of downward shifting of the shading zone 6 caused by the electronic optical axis correction, the upper turn-ON pixels appear in the area 7 above the shading zone 6. Since the pixel values (luminance) of the upper turn-ON pixels gradually increase with time, the area 7 is kept darkened for a while. The area 7 will, however, not cause a problem, since it is a space above the preceding car 32 free of object to be illuminated.

Operations of the lamp system 100 have been described. According to the lamp system 100, a dark area is prevented from occurring below the shading zone, even under pitching.

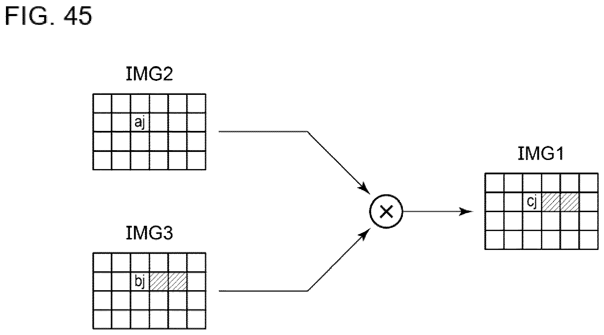

Fig. 45 is a diagram explaining creation of the control image by the controller 300. The controller 300 generates the control image IMG1, by multiplying corresponding pixel values in the reference image IMG2 and in the scaled image IMG3. Assuming now a pixel value of a certain pixel of the reference image IMG2 as $a_j$, a pixel value of a corresponding pixel of the scaled image IMG3 as $b_j$, and a pixel value of a corresponding pixel of the control image IMG1 as $c_j$, then

$$c_j = a_j \times b_j$$

holds.

The reference image IMG2 specifies an illuminance distribution of the basic light distribution in the absence of the shading zone. In other words, the reference image IMG2 defines the pixel values of the plurality of first pixels PIX1 in the absence of the shading zone.

The scaled image IMG3 contains a plurality of third pixels having pixel values of 0 to 1. The pixel values of the third pixels in the scaled image IMG3 represent the normalized luminance values in the gradual change control.

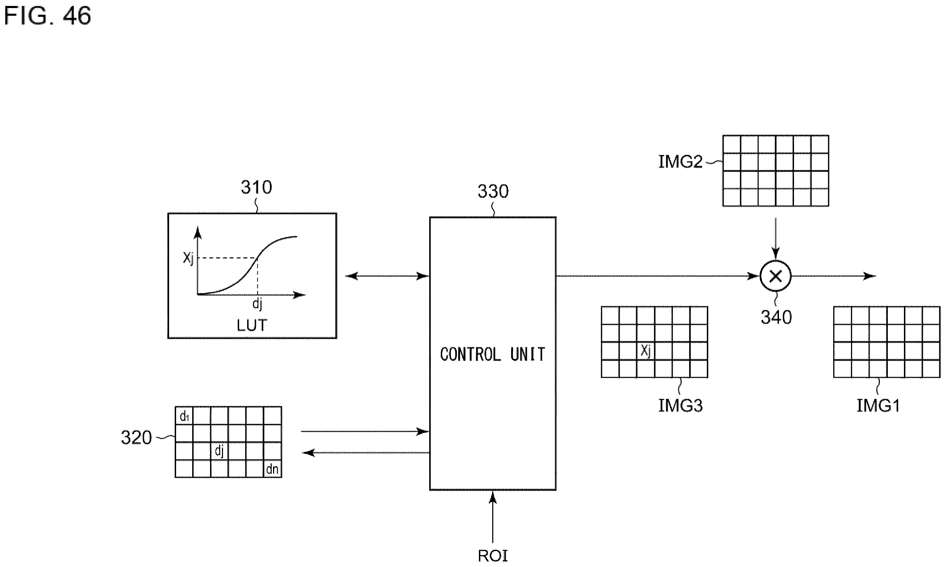

Fig. 46 is a functional block diagram of the controller 300. The controller 300 may be implemented by a microcontroller that contains a processor on which a software program can run. The block diagram in Fig. 46 therefore illustrates functions implemented by the program, in other words, processes that the program causes the processor to execute, as well as data described in the program, rather than a hardware configuration of the controller 300.

The controller 300 has the lookup table 310, the counter 320, a control unit 330, and the multiplier 340.

The counter 320 is allowed for independent count control for every pixel PIX1. Given the number of pixels of the control image IMG1 is n, the counter 320 can maintain n count values $d_1$ to $d_n$. The counter 320 increments the n count values $d_1$ to $d_n$ every control cycle. Upon shifting of the j-th pixel PIX1 from outside to inside of the ROI, the control unit 330 resets the j-th count value $d_j$ to 0. The count value $d_j$ is incremented by 1 from 0.

The control unit 330 generates the scaled image IMG3 with reference to the lookup table 310 and the counter 320. The lookup table 310 holds relationships between each of the control cycles according to the control waveforms WAVE_L and WAVE_U, and the normalized luminance value.

When creating the pixel value of the j-th pixel of the scaled image IMG3, the controller acquires the corresponding j-th count value $d_j$ of the counter 320. The controller then refers to the lookup table 310, to select the control waveform WAVE_L or WAVE_U, depending on the locations of the turn-ON pixels. The controller then reads out the normalized luminance value $x_j$ that corresponds to the count value $d_j$. The thus read normalized luminance value $x_j$ will give the pixel value of the j-th pixel of the scaled image IMG3.

The multiplier 340 generates the control image IMG1, by multiplying the pixel values in the reference image IMG2, and the corresponding pixel values in the scaled image IMG3.

Note that, in a case where the lower turn-ON pixels are returned back to have the previous luminance within a single control cycle, that is, in a case where the control waveform WAVE_L has a stepped waveform, the control waveform WAVE_L is not necessarily stored in the lookup table 310. In this case, it suffices that the gradual change control is invalidated, and the normalized luminance value x is set to 1 in the first control cycle.

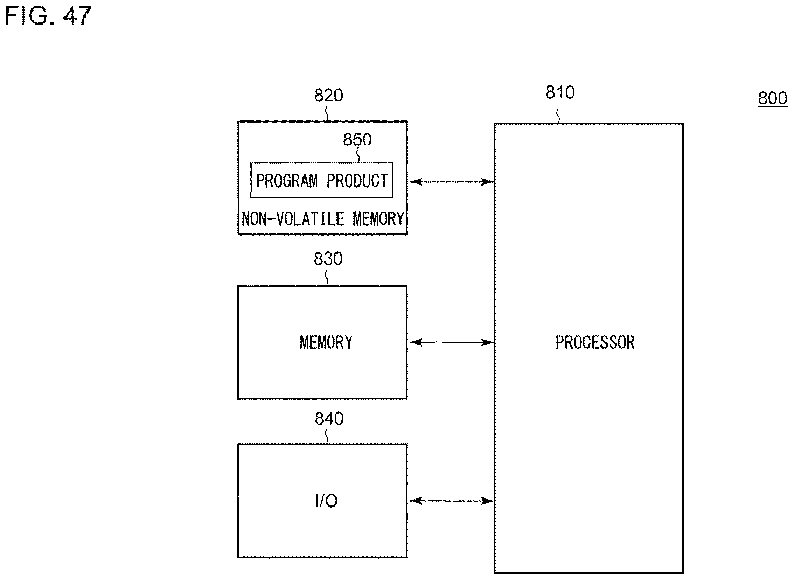

Fig. 47 is a functional block diagram of a microcontroller. A microcontroller 800 has a processor 810, a nonvolatile memory 820, a memory 830, and an interface circuit 840. The non-volatile memory 820 is a flash memory, and is a storage medium structured to store the aforementioned software program 850 run on the processor 810. The processor 810, upon start-up, loads the software program 850 into the memory 830, and executes instructions of the software program 850. The interface circuit 840 may include an universal asynchronous receiver and transmitter (UART); serial interface such as three-wire serial interface, and I2C bus interface; CAN interface; GPIO; and A/D converter or D/A converter. The microcontroller 800 may have the component built in a single IC package. Alternatively, several IC packages may be mounted on a printed circuit board to constitute a microcomputer board.

An exemplary implementation of the controller 300 has been described.

It is to be understood by those skilled in the art that the aforementioned Embodiment 4 is merely illustrative, and that combinations of the individual constituents or processes may be modified in various ways. Such modified examples will be explained below.

Although having described in Embodiment 4 that the variable light distribution lamp 210 was an LED array, the present disclosure is not limited thereto. For example, the variable light distribution lamp 210 may alternatively be constituted by a combination of a light source, and a spatial light modulator structured to pattern the light emitted from the light source. The spatial light modulator usable herein may be a digital micromirror device (DMD) or a liquid crystal device.

Having described in Embodiment 4 that the controller 300 was implemented by a microcontroller, the controller 300 may alternatively be implemented by a field programmable gate array (FPGA), or an application specific integrated circuit (ASIC).

The control waveform used for the gradual change control is not limited to a single straight line as illustrated in Fig. 41. For example, the control waveform may be given by a combination of a plurality of straight lines having different slopes, or may draw a gentle curve.

Having described the embodiments according to the present disclosure with use of specific terms, the description is merely illustrative for better understanding, and by no means limits the disclosure or the claims. The scope of the present invention is defined by the claims, and therefore encompasses any embodiments, Examples, and modified examples having not been described above.

INDUSTRIAL APPLICABILITY

The present disclosure relates to a vehicle lamp apparatus.

REFERENCE SIGNS LIST

100 lamp system, 110 vehicle ECU, 200 vehicle lamp apparatus, 210 variable light distribution lamp, 212 light-emitting device, 300 controller, IMG1 control image, IMG2 reference image, IMG3 scaled image

**Claims**

1. A controller structured to control a variable light distribution lamp, wherein the variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed,

   the controller being structured to acquire shading information that indicates a shading zone which is a region to be shaded, and to generate the control image in which pixel values of portions corresponding the shading zone among the plurality of first pixels are zero, and wherein, when pixel values of the first pixels included in the control image gradually change from zero toward a target value, a rate of increase of the pixel values in a first section after a start of gradual change control is relatively lower than a rate of increase of the pixel values in a second period subsequent to the first period.

2. The controller according to claim 1, wherein, when a normalized pixel value is defined as a pixel value normalized by the target value, and when the pixel values of the first pixels included in the control image gradually change from zero toward the target value, an increase amount of the normalized pixel value per control period increases toward a peak value.

3. The controller according to claim 2, wherein the increment of the normalized pixel value per control cycle decreases from the peak value towards zero.

4. The controller according to any one of claims 1 to 3, satisfying

$$\alpha < \gamma < \beta,$$

   where $\alpha$ represents an average slope in the first period, $\beta$ represents an average slope in the second period, and $\gamma$ represents an inclination over an entire period including the first period and the second period.

5. The control device according to claim 2, comprising a lookup table that specifies, for each control cycle, a normalized pixel value, the normalized pixel value being referred to as a pixel value normalized with the target value.

6. The controller according to claim 2 or 3, wherein the normalized pixel value is 10% or smaller, over control cycles from 0 to 5.

7. The controller according to claim 2 or 3, wherein the increment of the normalized pixel value per control time is 2.5% or smaller, over control cycles from 0 to 5.

8. The controller according to claim 2 or 3, wherein the controller is structured to generate the control image by multiplying pixel values of a reference image and a scaling image with each other, the reference image defining a distribution of pixel values of the plurality of first pixels corresponding to a basic light distribution in which the shading zone is absent, and the scaling image including a plurality of third pixels whose pixel values range from 0 to 1, and wherein pixel values of the third pixels of the scaling image are the normalized pixel values.

9. The controller according to any one of claims 1 to 3, further comprising a counter that contains a plurality of count values corresponding to the first pixels, and is structured to cause counting-up per control cycle.

10. A vehicle lamp apparatus comprising:

   the controller according to any one of claims 1 to 3; and
   the variable light distribution lamp.

11. A program for a controller for controlling a variable light distribution lamp, wherein the variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed, and the program causing a processor of the controller to execute:

   acquiring, from a vehicle, shading information that indicates a shading zone which is a region to be shaded, and
   generating the control image in which pixel values of portions corresponding the shading zone among the plurality of first pixels are zero, and wherein, when pixel values of the first pixels included in the control image gradually change from zero toward a target value, a rate of increase of the pixel values in a first section after a start of gradual change control is relatively lower than a rate of increase of the pixel values in a second period subsequent to the first period.

12. A controller structured to control a variable light distribution lamp, wherein the variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed,

   the controller being structured to acquire shading information indicating a shading zone that is a region to be shaded, to generate the control image in which pixel values of portions corresponding to the shading zone among the plurality of first pixels are zero, and
   wherein a waveform of the pixel values when changing the pixel values of the first pixels included in the control image is selectable.

13. The controller according to claim 12, wherein the controller is structured to select between a first waveform in which a fall transition time when the pixel values change from a non-zero initial value toward zero is relatively short, and a second waveform in which the fall transition time is relatively long.

14. The controller according to claim 13, wherein the fall transition time of the first waveform is one control cycle.

15. The controller according to claim 13, wherein the fall transition time of the second waveform is three to six control cycles.

16. The controller according to claim 13, wherein values of the second waveform decrease in an accelerated manner.

17. The controller according to any one of claims 12 to 16, wherein the controller is structured to select, when the pixel values change from zero toward a non-zero target value, between a third waveform in which a rise transition time until reaching 90% of the target value is relatively short, and a fourth waveform in which the rise transition time is relatively long.

18. The controller according to claim 17, wherein, in the third waveform, a rate of increase of the pixel values in a first period after a start of gradual change control is relatively lower than a rate of increase of the pixel values in a second period subsequent to the first period.

19. The controller according to claim 12, wherein the controller is structured to generate a first waveform having a relatively short fall transition time and a second waveform having a relatively long fall transition time when the pixel values change from a non-zero initial value toward zero, to generate a third waveform having a relatively short rise transition time until reaching 90% of a target value and a fourth waveform having a relatively long rise transition time when the pixel values change from zero toward the non-zero target value,

and wherein the controller is switchable between a first mode in which the pixel values are decreased according to the first waveform and then increased according to the third waveform, and a second mode in which the pixel values are decreased according to the second waveform and then increased according to the fourth waveform.

20. The controller according to any one of claims 12 to 16, wherein, when a normalized pixel value is defined as a pixel value normalized by the initial value or the target value, the controller comprises a lookup table that specifies the normalized pixel value for each control period.

21. The controller according to any one of claims 12 to 16, wherein the controller is structured to generate the control image by multiplying corresponding pixel values of a reference image and a scaling image with each other, the reference image defining a distribution of pixel values of the plurality of first pixels corresponding to a basic light distribution in which the shading zone is absent, and the scaling image including a plurality of third pixels whose pixel values range from 0 to 1.

22. A vehicle lamp apparatus comprising:

the controller according to any one of claims 12 to 16; and
the variable light distribution lamp.

23. A program for a controller that controls a variable light distribution lamp, wherein the variable light distribution lamp includes a plurality of second pixels whose luminance is controllable in accordance with a plurality of first pixels contained in a control image, and is structured to irradiate, with a beam having an intensity distribution corresponding to a luminance distribution of the second pixels, a region where a high beam light distribution is to be formed,

the program causing a processor of the controller to execute:

acquiring, from a vehicle, shading information indicating a shading zone that is a region to be shaded, and
generating the control image in which pixel values of portions corresponding to the shading zone among the plurality of first pixels are zero, wherein a waveform of the pixel values when changing the pixel values of the first pixels included in the control image is selectable.

24. A controller for controlling a variable light distribution lamp, wherein the variable light distribution lamp includes a plurality of light-emitting pixels and is structured to irradiate, with a beam having an intensity distribution corresponding to a luminance distribution of the plurality of the light-emitting pixels, a region where a high beam light distribution is to be formed,

the controller being structured to acquire information indicating a region of interest (ROI), to turn off a plurality of the light-emitting pixels corresponding to the ROI, and, when increasing luminance of the light-emitting pixels from zero toward a target value due to movement of the ROI, to change pixel values of the light-emitting pixels according to different control waveforms depending on a relative positional relationship with the ROI.

25. The controller according to claim 24, wherein, when luminance of the light-emitting pixels is increased from zero toward a target value due to movement of the ROI, a control waveform applied to the light-emitting pixels located on a lower-end side of the ROI has a relatively high rate of increase, and a control waveform applied to the light-emitting pixels located on an upper-end side of the ROI has a relatively low rate of increase.

26. The controller according to claim 24, wherein, when luminance of the light-emitting pixels is increased from zero toward a target value due to movement of the ROI, a control waveform applied to the light-emitting pixels located on a right-end side or a left-end side of the ROI has the same rate of increase as a control waveform applied to the light-emitting pixels located on an upper-end side of the ROI.

27. The controller according to any one of claims 24 to 26, comprising a lookup table that stores the waveform as a normalized luminance value for each control cycle, wherein the normalized luminance value is defined as a luminance normalized with respect to the target value.

28. The controller according to any one of claims 24 to 26,

being structured to generate luminance values of the light-emitting pixels, by multiplying pixel values in a reference image that specifies a distribution of luminance values of the light-emitting pixels corresponding to a basic light distribution in the absence of the region of interest, and corresponding pixel values in a scaled image that contains a plurality of pixels having pixel values of 0 to 1.

29. A vehicle lamp apparatus comprising:

the controller according to any one of claims 24 to 26; and
the variable light distribution lamp.

30. A program for a controller for controlling a variable light distribution lamp, wherein the variable light distribution lamp includes a plurality of light-emitting pixels and is structured to irradiate, with a beam having an intensity distribution corresponding to a luminance distribution of the plurality of the light-emitting pixels, a region where a high beam light distribution is to be formed,
the program causing a processor of the controller to execute:

a step of acquiring, from a vehicle, information indicating a region of interest;
a step of turning off the plurality of light-emitting pixels corresponding to the region of interest; and
a step of, when increasing a luminance of the light-emitting pixels from zero toward a target value due to movement of the region of interest, changing the luminance of the light-emitting pixels according to different control waveforms in accordance with a relative positional relationship with the region of interest.

31. A controller structured to control a variable light distribution lamp, wherein the variable light-distribution lamp includes a plurality of light-emitting pixels and is structured to irradiate a region in which a high-beam light distribution is to be formed with portions of light having an intensity distribution corresponding to a luminance distribution of the plurality of light-emitting pixels,
the controller being structured to:

acquire information indicating a region of interest (ROI), and select, as a plurality of off pixels, ones of the plurality of light-emitting pixels corresponding to the ROI such that a shading portion is formed corresponding to the ROI;
detect a tilt angle of a vehicle body, and dynamically shift positions of the plurality of off pixels in an up-down direction such that a position of the shading portion changes according to the tilt angle; and
set, as turn-on pixels, the light-emitting pixels that change from off to on as a result of dynamically shifting the positions of the plurality of off pixels, wherein a transition time of a luminance of the turn-on pixels located on a lower-end side of the ROI is shorter than a transition time of a luminance of the turn-on pixels located on an upper-end side of the ROI.

32. The controller according to claim 31, comprising a lookup table that stores a first waveform defining, for the turn-on pixels located on an upper-end side of the ROI, a normalized luminance value for each control cycle, wherein the normalized luminance value is defined as a luminance normalized with respect to the target value when the luminance of the turn-on pixels transitions from zero to the target value.

33. The controller according to claim 32, wherein, for the turn-on pixels located on a lower-end side of the ROI, the luminance is increased from zero to the target value within one control cycle without referring to the first waveform.

34. The controller according to claim 32, wherein the lookup table further stores a second waveform defining, for the turn-on pixels located on a lower-end side of the ROI, the normalized luminance value for each control cycle.

35. The controller according to any one of claims 31 to 34, wherein the controller is structured to generate luminance values of the plurality of light-emitting pixels by multiplying, pixel value by pixel value, a reference image defining a distribution of luminance values of the plurality of light-emitting pixels corresponding to a basic light distribution in which no ROI exists, and a scaling image including a plurality of pixels having pixel values ranging from 0 to 1.

36. A vehicle lamp apparatus comprising:

the controller according to any one of claims 31 to 34; and
the variable light distribution lamp.

37. A program for a controller for controlling a variable light distribution lamp, wherein the variable light-distribution lamp includes a plurality of light-emitting pixels and is structured to irradiate a region in which a high-beam light distribution is to be formed with portions of light having an intensity distribution corresponding to a luminance distribution of the plurality of light-emitting pixels,
the program causing a processor of the controller to execute:

a step in which the processor acquires, from a vehicle, information indicating a region of interest (ROI);
a step in which the processor selects, as a plurality of off pixels, ones of the plurality of light-emitting pixels corresponding to the ROI such that a shading portion is formed corresponding to the ROI;
a step in which the processor turns off the plurality of light-emitting pixels corresponding to the ROI;
a step in which the processor detects a tilt angle of a vehicle body; and

a step in which the processor dynamically shifts positions of the plurality of off pixels in an up-down direction such that a position of the shading portion changes according to the tilt angle, wherein, as a result of dynamically shifting the positions of the plurality of off pixels, light-emitting pixels that change from off to on are set as turn-on pixels, and a transition time of a luminance of the turn-on pixels located on a lower-end side of the ROI is shorter than a transition time of a luminance of the turn-on pixels located on an upper-end side of the ROI.

EP 4 678 474 A1

FIG. 1

FIG. 2

FIG. 3

FIG. 4

COMPARATIVE TECHNIQUE

FIG. 5

COMPARATIVE TECHNIQUE

NORMALIZED PIXEL VALUE

ROI POSITION

FIG. 6

FIG. 7

IMG2

IMG3

IMG1

FIG. 8

EP 4 678 474 A1

FIG. 9

FIG. 10

FIG. 11

FIG. 12

NORMALIZED PIXEL VALUE: 100%, 90%, 80%, 70%, 60%, 50%, 40%, 30%, 20%, 10%, 0%

TIME (CONTROL CYCLE): 0 1 2 3 4 5 6 7 8 9 10 11 12 13 14 15 16 17 18 19 20

T, Tr3, Tr4, W3, W4, t

FIG. 13

FIRST MODE

SECOND MODE

TIME (CONTROL CYCLE)

# FIG. 14

FIRST MODE

SECOND MODE

EP 4 678 474 A1

FIG. 15

FIG. 16

EP 4 678 474 A1

FIG. 17

W4a

NORMALIZED PIXEL VALUE (%)

TIME (CONTROL CYCLE)

FIG. 18

FIG. 19

FIG. 20

COMPARATIVE TECHNIQUE

FIG. 21

COMPARATIVE TECHNIQUE

FIG. 22

NORMALIZED PIXEL VALUE

100%

50%

0%

ROI POSITION

(ii)

(i)

$t_0$   $t_1$   $t_2$   $t_3$

EP 4 678 474 A1

51

FIG. 23

FIG. 24

FIG. 25

FIG. 26

FIG. 27

FIG. 28

FIG. 29A

PIX1　　　　　IMG1

PIX_U　ROI（ⅰ）

ROI（ⅱ）

FIG. 29B

PIX1　　　　　IMG1

ROI（ⅱ）

PIX_L　ROI（ⅰ）

EP 4 678 474 A1

FIG. 30

FIG. 31

FIG. 32

EP 4 678 474 A1

FIG. 33

FIG. 34

FIG. 35

FIG. 36

EP 4 678 474 A1

FIG. 37

EP 4 678 474 A1

FIG. 38

PRIOR TECHNIQUE

EP 4 678 474 A1

## FIG. 39

ELECTRONIC OPTICAL AXIS CORRECTION

$\theta_P < 0°$

$\theta_P = 0°$

$\theta_P > 0°$

PIX_OFF

PIX_TURNOFF {

PIX_TURNON {

$\Delta Y$

ROI

PIX_OFF

ROI

PIX_TURNON {

$\Delta Y$

ROI

PIX_TURNOFF {

PIX_OFF

FIG. 40

ELECTRONIC OPTICAL AXIS CORRECTION

# FIG. 41

WAVE_U

WAVE_L

CONTROL CYCLE

EP 4 678 474 A1

FIG. 42

COMPARATIVE TECHNIQUE

EP 4 678 474 A1

FIG. 43

FIG. 44

EP 4 678 474 A1

FIG. 45

IMG2

IMG3

IMG1

FIG. 46

## FIG. 47

EP 4 678 474 A1

## INTERNATIONAL SEARCH REPORT

| International application No. |
|---|
| **PCT/JP2024/008565** |

**A.    CLASSIFICATION OF SUBJECT MATTER**

*B60Q 1/14*(2006.01)i; *B60Q 1/02*(2006.01)i; *B60Q 1/04*(2006.01)i; *B60Q 1/10*(2006.01)i; *F21S 41/153*(2018.01)i;
*F21S 41/663*(2018.01)i; *F21W 102/145*(2018.01)n; *F21Y 105/10*(2016.01)n; *F21Y 115/10*(2016.01)n
FI:    B60Q1/14 A; B60Q1/04 E; B60Q1/14 Z; F21S41/153; B60Q1/10; B60Q1/02 A; B60Q1/14 F; B60Q1/14 H;
        F21S41/663; F21W102:145; F21Y105:10; F21Y115:10

According to International Patent Classification (IPC) or to both national classification and IPC

**B.    FIELDS SEARCHED**

Minimum documentation searched (classification system followed by classification symbols)

B60Q1/14; B60Q1/02; B60Q1/04; B60Q1/10; F21S41/153; F21S41/663; F21W102/145; F21Y105/10; F21Y115/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2021/070783 A1 (KOITO MANUFACTURING CO., LTD.) 15 April 2021 (2021-04-15) paragraphs [0017]-[0130], fig. 1-12 | 1, 4, 9-11, 24, 29-30 |
| A | | 2-3, 5-8, 12-23, 25-28, 31-37 |
| Y | JP 2022-12226 A (MAZDA MOTOR CORPORATION) 17 January 2022 (2022-01-17) paragraphs [0033]-[0042], fig. 6 | 1, 4, 9-11 |
| Y | JP 2015-149307 A (KOITO MANUFACTURING CO., LTD.) 20 August 2015 (2015-08-20) paragraph [0102] | 1, 4, 9-11 |
| Y | JP 2006-20283 A (GENTEX CORPORATION) 19 January 2006 (2006-01-19) paragraphs [0015]-[0105], fig. 1-12 | 9 |
| Y | JP 2016-15332 A (KOITO MANUFACTURING CO., LTD.) 28 January 2016 (2016-01-28) paragraph [0064], fig. 6 | 24, 29-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/008565**

**Box No. III**     **Observations where unity of invention is lacking (Continuation of item 3 of first sheet)**

This International Searching Authority found multiple inventions in this international application, as follows:

Document 1: WO 2021/070783 A1 (KOITO MANUFACTURING CO., LTD.) 15 April 2021 (2021-04-15) paragraphs [0017]-[0130], fig. 1-12 & US 2022/0227285 A1, paragraphs [0030]-[0163], fig. 1-12 & EP 4044148 A1 & CN 114514143 A

Claims are classified into the following four inventions.

(Invention 1) Claims 1-11

Claims 1-11 have the special technical feature of a "control device for controlling a variable light distribution lamp, wherein the variable light distribution lamp includes a plurality of second pixels having luminance that can be controlled according to a plurality of first pixels in a control image, and is configured to be able to irradiate a region, in which high beam light distribution is to be formed, with a beam having intensity distribution according to the luminance distribution of the plurality of second pixels, and wherein the control device obtains light blocking information representing a light-blocking portion that is a region in which light has to be blocked, and forms the control image in which a pixel value for a portion, corresponding to the light-blocking portion, of the plurality of first pixels is zero, and wherein, when the pixel value of the first pixel in the control image gradually changes from zero to a target value, the increase rate of pixel values in a first zone after starting control of the gradual change is relatively lower than the increase rate of pixel values in a second zone following the first zone" and are thus classified as invention 1.

(Invention 2) Claims 12-23

Claims 12-23 share, with claim 1 classified as invention 1, the common technical feature of a "control device for controlling a variable light distribution lamp, wherein the variable light distribution lamp includes a plurality of second pixels having luminance that can be controlled according to a plurality of first pixels in a control image, and is configured to be able to irradiate a region, in which high beam light distribution is to be formed, with a beam having intensity distribution according to the luminance distribution of the plurality of second pixels, and wherein the control device obtains light blocking information representing a light-blocking portion that is a region in which light has to be blocked, and forms the control image in which a pixel value for a portion, corresponding to the light-blocking portion, of the plurality of first pixels is zero." However, said technical feature does not make a contribution over the prior art in light of the disclosure of document 1 (in particular, see paragraphs [0017]-[0130] and fig. 1-12) and thus cannot be said to be a special technical feature. Also, there are no other same or corresponding special technical features between claim 12-23 and claim 1.

In addition, claims 12-23 are not dependent on claim 1. Furthermore, claims 12-23 are not substantially identical to or similarly closely related to any of the claims classified as inventions 1.

Accordingly, claims 12-23 cannot be classified as invention 1.

Also, claims 12-23 have the special technical feature of a "control device obtains light blocking information representing a light-blocking portion that is a region in which light has to be blocked, forms a control image in which a pixel value for a portion, corresponding to the light-blocking portion, of a plurality of first pixels is zero, and can select a waveform of the pixel value of the first pixel in the control image when changing the pixel value" and are thus classified as invention 2.

(Invention 3) Claims 24-30

Claims 24-30 share, with claim 1 classified as invention 1 and claim 12 classified as invention 2, the common technical feature of a "control device for controlling a variable light distribution lamp, wherein the variable light distribution lamp includes a plurality of pixels, and is configured to be able to irradiate a region, in which high beam light distribution is to be formed, with a beam having intensity distribution according to the luminance distribution of the plurality of pixels." However, said technical feature does not make a contribution over the prior art in light of the disclosure of document 1 (in particular, see paragraphs [0017]-[0130] and fig. 1-12) and thus cannot be said to be a special technical feature. Also, there are no other same or corresponding special technical features between claims 24-30 and claim 1 or 12.

In addition, claims 24-30 are not dependent on any of claims 1 and 12. Furthermore, claims 24-30 are not substantially identical to or similarly closely related to any of the claims classified as invention 1 or 2.

Therefore, claims 24-30 cannot be classified as either invention 1 or 2.

Also, claims 24-30 have the special technical feature of: "obtaining information indicating a region of interest; and turning off a plurality of light-emitting pixels corresponding to the region of interest, wherein, when the luminance of the light-emitting pixels is increased from zero to a target value due to movement of the region

Form PCT/ISA/210 (continuation of first sheet) (July 2022)

## INTERNATIONAL SEARCH REPORT

| International application No. |
| --- |
| **PCT/JP2024/008565** |

**Box No. III      Observations where unity of invention is lacking (Continuation of item 3 of first sheet)**

of interest, the pixel value of the light-emitting pixels can be changed according to different control waveforms depending on the relative positional relationship with the region of interest" and are thus classified as invention 3.

(Invention 4) Claims 31-37

Claims 31-37 share, with claim 1 classified as invention 1, claim 12 classified as invention 2, and claim 24 classified as invention 3, the common technical feature of a "control device for controlling a variable light distribution lamp, wherein the variable light distribution lamp includes a plurality of pixels, and is configured to be able to irradiate a region, in which high beam light distribution is to be formed, with a beam having intensity distribution according to the brightness distribution of the plurality of pixels." However, said technical feature does not make a contribution over the prior art in light of the disclosure of document 1 (in particular, see paragraphs [0017]-[0130] and fig. 1-12) and thus cannot be said to be a special technical feature. Also, there are no other same or corresponding special technical features between claim 31-37 and claim 1, 12, or 24.

In addition, claims 31-37 are not dependent on any of claims 1, 12, and 24. Furthermore, claims 31-37 are not substantially identical to or similarly closely related to any of the claims classified as invention 1, 2, or 3.

Therefore, claims 31-37 cannot be classified as any of inventions 1-3.

Also, claims 31-37 have the special technical feature in which "a control device obtains information indicating a region of interest; selects pixels, corresponding to the region of interest, from among a plurality of light-emitting pixels as a plurality of off-pixels so that a light-blocking portion is formed corresponding to the region of interest; detects a tilting angle of a vehicle; dynamically shifts the positions of the plurality of off-pixels in a vertical direction so that the position of the light-blocking portion changes according to the tilting angle; and sets, as a turn-on pixel, the light-emitting pixel that is turned from off to on as a result of dynamically shifting the positions of the plurality of off pixels, wherein the transition time of luminance of the turn-on pixel located on the lower end side of the region of interest is shorter than the transition time of luminance of the turn-on pixel located on the upper end side of the region of interest" and are thus classified as invention 4.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

| INTERNATIONAL SEARCH REPORT<br>Information on patent family members | | International application No.<br>**PCT/JP2024/008565** |
|---|---|---|

| Patent document<br>cited in search report | Publication date<br>(day/month/year) | Patent family member(s) | Publication date<br>(day/month/year) |
|---|---|---|---|
| WO 2021/070783 A1 | 15 April 2021 | US 2022/0227285 A1<br>paragraphs [0030]-[0163], fig.<br>1-12<br>EP 4044148 A1<br>CN 114514143 A | |
| JP 2022-12226 A | 17 January 2022 | (Family: none) | |
| JP 2015-149307 A | 20 August 2015 | (Family: none) | |
| JP 2006-20283 A | 19 January 2006 | US 5990469 A<br>column 4, line 20 to column<br>29, line 61, fig. 1-12<br>WO 1999/014943 A1<br>EP 2420408 A1<br>DE 29825026 U1<br>CA 2301087 A1<br>CN 1270736 A<br>KR 10-0511801 B1 | |
| JP 2016-15332 A | 28 January 2016 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021182151 A1

- WO 2021200701 A1